# EUROPEAN PATENT APPLICATION

(11) **EP 4 832 538 A1**
(43) Date of publication of application: **28.10.2026**
(21) Application number: 24910818.4
(22) Date of filing: 16.12.2024
(51) Int. Cl.: H04W 12/106

(54) **DATA PROCESSING METHOD AND APPARATUS**

(30) Priority: 29.12.2023 CN 202311866084
(71) Applicant: Huawei Technologies Co., Ltd., Shenzhen, Guangdong 518129 (CN)
(72) Inventor: XIANG, Hongyu, Shenzhen, Guangdong 518129 (CN); CHEN, Lei, Shenzhen, Guangdong 518129 (CN)
(74) Representative: Isarpatent
(86) International application number: PCT/CN2024/139703
(87) International publication number: WO 2025/139887

(57) **Abstract**

A data processing method and apparatus are provided, which can perform integrity protection on data units at a lower protocol layer of a Packet Data Convergence Protocol (PDCP) layer, thereby improving the security performance of data transmission and enhancing user experience. The method includes: a first communications apparatus determining a plurality of data units at a first protocol layer and a first verification code, and sending a first protocol data unit (PDU) that includes the plurality of data units and the first verification code. Herein, the first protocol layer is a lower protocol layer of the PDCP layer, and the first verification code is used to ver ify the integrity of the plurality of data units. A second communications apparatus receives the first PDU, determines a second verification code, and determines whether the plurality of data units have been altered based on the first verification code and the second verification code. Herein, the second verification code is used to verify the integrity of the plurality of data units.

## Description

This application claims priority to Chinese Patent Application No. 202311866084.2, filed with the China National Intellectual Property Administration on December 29, 2023, and entitled "Data Processing Method and Apparatus," which is incorporated herein by reference in its entirety.

### Technical Field

Embodiments of this application relate to the communications field, and in particular, to a data processing method and apparatus.

### Background

In wireless communication, communication security is a crucial factor, involving the protection of user data security. Pseudo base station attacks are a common method that threatens wireless security. A pseudo base station is an illegal base station, typically composed of simple wireless devices and specialized open-source software.

Currently, although secure processing, such as encryption and/or integrity protection, can be performed on the information between the terminal and the base station after booting into the secure mode, this secure processing is limited to the user plane protocol data unit (PDU) at the Packet Data Convergence Protocol (PDCP) layer. For other user plane PDUs, no security processing is currently performed.

However, many other user-plane PDUs, in addition to user-plane data PDUs, carry important control information. If these user-plane PDUs are exploited by fake base stations or unauthorized terminals to forge or monitor them, it could pose significant security risks.

### Summary

This application provides a data processing method and apparatus, which can improve the security performance of data transmission.

According to a first aspect, a data processing method is provided. This method may be performed by a first communication apparatus, or may be performed by a module (such as a processor, a chip, or a chip system) applied to the first communication apparatus, or may be implemented by a logical node, a logical module, or software that can achieve all or part of the functions of the first communication apparatus. The method includes: determining a plurality of data units at a first protocol layer, where the first protocol layer is a lower-layer protocol layer of the Packet Data Convergence Protocol (PDCP) layer; determining a first verification code used to verify the integrity of the plurality of data units; and outputting a first protocol data unit (PDU) that includes the plurality of data units and the first verification code.

Based on this solution, the transmitting end can perform integrity protection on the data units at the first protocol layer. Since the first protocol layer is located at a lower layer of the PDCP layer, or is a lower-level protocol layer, it can be considered that the solution of this application provides integrity protection for the data units at the lower-level protocol layer, thereby enabling the receiving end to perform integrity verification on the data units at this lower-level protocol layer, thus identifying whether there is a malicious attack and subsequently taking corresponding measures to enhance the user's service experience. Additionally, since the PDU at the higher protocol layer is typically used as the data unit at the lower protocol layer, it can be considered that the solution of this application provides integrity protection for the PDUs (including user plane PDUs and control plane PDUs) at the higher protocol layer at the first protocol layer, thereby preventing pseudo base stations or unauthorized terminals from exploiting these PDUs, and improving the security performance of data transmission. Furthermore, the result of performing integrity protection on multiple data units is an integrity check value (i.e., the first integrity check value), which, compared to each data unit having a separate integrity check value, can reduce the signaling overhead.

In a possible design, determining the first verification code includes: determining verification codes respectively corresponding to the plurality of data units, and then determining the first verification code based on the verification codes respectively corresponding to the plurality of data units.

Based on this possible design, the first communications apparatus first determines the verification codes respectively corresponding to the plurality of data units, and then determines the first verification code based on the verification codes respectively corresponding to the plurality of data units. Therefore, after the first communications apparatus obtains the data units, integrity protection processing can be immediately performed, without the need to wait until the first protocol layer entity assembles the first PDU and then perform integrity protection processing. This reduces a data processing delay, thereby improving service performance.

In a possible design, the first verification code is an exclusive OR of the verification codes respectively corresponding to the plurality of data units; or, the first verification code is a verification code obtained after integrity protection is performed on the verification codes respectively corresponding to the plurality of data units.

Based on this possible design, the first verification code is obtained by performing exclusive OR or integrity protection on the verification codes respectively corresponding to the plurality of data units, and then the first verification code is sent. Compared with sending the verification code respectively corresponding to each data unit, this design can reduce signaling overheads.

In a possible design, the plurality of data units include the first data unit. The verification code corresponding to the first data unit is obtained based on the first data unit and at least one of the following: a key, a value corresponding to the first PDU, a transmission direction of the first PDU, a hybrid automatic repeat request HARQ identifier corresponding to the first PDU, a logical channel identifier LCID corresponding to the first data unit, a radio bearer identifier corresponding to the first data unit, or a type parameter of the first data unit, where the value corresponding to the first PDU is used to identify the first PDU, or is used to indicate a time domain and/or a frequency domain location where the first PDU is located.

In a possible design, the plurality of data units include the first data unit, the first PDU includes a first sub-PDU, and the first data unit is located in the first sub-PDU; and a subheader of the first sub-PDU includes the first information, where the first information is used to indicate that integrity protection is performed on the first data unit.

Based on this possible design, the transmitting end may indicate which data units are integrity protected, so that the receiving end can clearly identify the data units for which integrity verification needs to be performed, thereby determining the second verification code based on the correct data units, and improving accuracy of integrity verification.

In a possible design, the first PDU includes a second sub-PDU, the first verification code is located in the second sub-PDU, and a subheader of the second sub-PDU includes length information of the first verification code.

Based on this possible design, the transmitting end indicates the length information of the first verification code, which can help the receiving end obtain the first verification code more accurately, thereby improving accuracy of integrity verification.

In a possible design, the determining a plurality of data units at the first protocol layer includes: determining the plurality of data units at the first protocol layer based on at least one logical channel identifier LCID or at least one logical channel group LCG identifier, where a data unit corresponding to at least one LCID or LCG identifier is a data unit that needs to be integrity protected. The at least one LCID includes an LCID of each of the plurality of data units, or the at least one LCG identifier includes an LCG identifier of each of the plurality of data units.

Based on this possible design, when the at least one LCID or LCG identifier is defined by a protocol or preconfigured, both the transmitting end and the receiving end may determine, based on the at least one LCID or LCG identifier, the data unit that needs to be integrity protected/verified, so that the transmitting end does not need to send information to the receiving end to indicate integrity protection performed on which data units, thereby reducing signaling overheads.

In a possible design, the determining the first verification code includes: determining a first input parameter, and determining the first verification code based on the first input parameter. The first input parameter includes the first bitstream and at least one of the following: a key, a value corresponding to the first PDU, a transmission direction of the first PDU, or a hybrid automatic repeat request HARQ identifier corresponding to the first PDU. The first bitstream is a set of a plurality of data units, or the first bitstream is a set of sub-PDUs in which the plurality of data units are located. The value corresponding to the first PDU is used to identify the first PDU or used to indicate a time domain and/or a frequency domain location at which the first PDU is located.

Based on this possible design, because the first bitstream is a set of a plurality of data units, or the first bitstream is a set of sub-PDUs in which the plurality of data units are located, an integrity protection algorithm operation needs to be performed only once in a process of determining the first verification code, thereby reducing calculation overheads. In addition, when the first bitstream is the set of sub-PDUs in which the plurality of data units are located, integrity protection is also performed on sub-headers corresponding to the plurality of data units, thereby further improving security performance.

In a possible design, the plurality of data units are all data units in the first PDU, the header of the first PDU includes second information, and the second information is used to indicate that integrity protection has been performed on the first PDU or all data units in the first PDU.

In a possible design, the first PDU is located in a first transport block TB, and the plurality of data units are all data units in the first PDU. The method further includes: determining scheduling information of the first TB, where the scheduling information includes third information, and the third information is used to indicate that integrity protection needs to be performed on a PDU included in the first TB or all data units in the PDU.

In a possible design, the plurality of data units are some data units in the first PDU, the header of the first PDU includes fourth information, and the fourth information is used to indicate that integrity protection has been performed on the plurality of data units or the sub-PDUs in which the plurality of data units are located.

Based on the foregoing three possible designs, the transmitting end may indicate which data units have integrity protection performed thereon, so that the receiving end can clearly identify the data units on which integrity verification needs to be performed, thereby determining the second verification code based on correct data units, and improving accuracy of integrity verification.

In a possible design, the fourth information includes a bitmap, where the bitmap includes M bits, M is a total quantity of data units in the first PDU, and the M bits are in a one-to-one correspondence with the M data units or the M sub-PDUs in the first PDU. When a value of a first bit in the M bits is a preset value, it indicates that integrity protection is performed on a data unit or sub-PDU corresponding to the first bit, where the first bit is any one of the M bits.

In a possible design, when the value corresponding to the first PDU is used to identify the first PDU, the value corresponding to the first PDU is a sequence number SN or a count number COUNT; or when the value corresponding to the first PDU is used to indicate a time domain and/or a frequency domain location at which the first PDU is located, the value corresponding to the first PDU is any one of the following: a system frame number SFN at which the first PDU is located, a value obtained based on an SFN and a hyper system frame number H-SFN at which the first PDU is located, an index of a time domain resource at which the first PDU is located, or a value of a time-frequency resource indication field, where the first PDU is carried on the time-frequency resource indicated by the value of the time-frequency resource indication field.

In a possible design, the first protocol layer is a media access control (MAC) layer, and the data unit includes a MAC service data unit (SDU) or a MAC control element (CE).

According to a second aspect, a data processing method is provided. The method may be performed by a second communications apparatus, or may be performed by a module (for example, a processor, a chip, or a chip system) applied to the second communications apparatus, or may be implemented by a logical node, a logical module, or software that can implement all or some functions of the second communications apparatus. The method includes: receiving a first protocol data unit (PDU), where the first PDU includes a plurality of data units at a first protocol layer and a first verification code, the first protocol layer is a lower-layer protocol layer of a packet data convergence protocol (PDCP) layer, and the first verification code is used to verify integrity of the plurality of data units; determining a second verification code, where the second verification code is used to verify integrity of the plurality of data units; and determining whether the plurality of data units are changed based on the first verification code and the second verification code. For technical effects brought by the second aspect, refer to the technical effects brought by the first aspect. Details are not described herein again.

In a possible design, determining the second verification code includes: determining verification codes respectively corresponding to the plurality of data units, and determining the second verification code based on the verification codes respectively corresponding to the plurality of data units.

In a possible design, the second verification code is an exclusive OR of verification codes respectively corresponding to the plurality of data units; or the second verification code is a verification code obtained after integrity protection is performed on the verification codes respectively corresponding to the plurality of data units.

In a possible design, the plurality of data units include a first data unit. The verification code corresponding to the first data unit is obtained based on the first data unit and at least one of the following: a key, a value corresponding to the first PDU, a transmission direction of the first PDU, a hybrid automatic repeat request HARQ identifier corresponding to the first PDU, a logical channel identifier LCID corresponding to the first data unit, a radio bearer identifier corresponding to the first data unit, or a type parameter of the first data unit, where the value corresponding to the first PDU is used to identify the first PDU, or is used to indicate a time domain and/or a frequency domain location at which the first PDU is located.

In a possible design, the plurality of data units include a first data unit, the first PDU includes a first sub-PDU, and the first data unit is located in the first sub-PDU; the subheader of the first sub-PDU includes the first information, where the first information is used to indicate that integrity protection is performed on the first data unit.

In a possible design, the method further includes: determining at least one logical channel identifier LCID or at least one logical channel group LCG identifier, where a data unit corresponding to the at least one LCID or LCG identifier is a data unit that needs to perform integrity protection. The at least one LCID includes an LCID of each of the plurality of data units, or the at least one LCG identifier includes an LCG identifier of each of the plurality of data units.

In a possible design, the determining a second verification code includes: determining a first input parameter, and determining the second verification code based on the first input parameter. The first input parameter includes the first bitstream and at least one of the following: a key, a value corresponding to the first PDU, a transmission direction of the first PDU, or a hybrid automatic repeat request HARQ identifier corresponding to the first PDU. The first bitstream is a set of a plurality of data units, or the first bitstream is a set of subPDUs in which the plurality of data units are located; the value corresponding to the first PDU is used to identify the first PDU or used to indicate a time domain and/or a frequency domain location at which the first PDU is located.

In a possible design, the plurality of data units are all data units in the first PDU, the header of the first PDU includes second information, and the second information is used to indicate that integrity protection is performed on the first PDU or all data units in the first PDU.

In a possible design, the first PDU is located in a first transport block TB, and the plurality of data units are all data units in the first PDU. The method further includes: determining scheduling information of the first TB, where the scheduling information includes third information, and the third information is used to indicate that integrity protection needs to be performed on a PDU included in the first TB or all data units in the PDU.

In a possible design, the plurality of data units are some data units in the first PDU, the header of the first PDU includes fourth information, and the fourth information is used to indicate that integrity protection is performed on the plurality of data units or sub-PDUs in which the plurality of data units are located.

In a possible design, when the value corresponding to the first PDU is used to identify the first PDU, the value corresponding to the first PDU is a sequence number SN or a count number; or when the value corresponding to the first PDU is used to indicate a time domain and/or frequency domain location at which the first PDU is located, the value corresponding to the first PDU is any one of the following: a system frame number SFN at which the first PDU is located, a value obtained based on an SFN and a hyper system frame number H-SFN at which the first PDU is located, an index of a time domain resource at which the first PDU is located, or a value of a time-frequency resource indication field, where the value of the time-frequency resource indication field indicates a time-frequency resource used to carry the first PDU.

In a possible design, the first protocol layer is a media access control MAC layer, and the data unit includes a MAC service data unit SDU or a MAC control element CE.

For technical effects brought by any possible design in the second aspect, refer to technical effects brought by corresponding designs in the first aspect. Details are not described herein again.

According to a third aspect, a data processing method is provided. The method may be performed by a first communications apparatus, or may be performed by a module (for example, a processor, a chip, or a chip system) applied to the first communications apparatus, or may be implemented by a logical node, a logical module, or software that can implement all or some functions of the first communications apparatus. The method includes: determining a plurality of data units at a first protocol layer, where the first protocol layer is a lower-layer protocol layer of a packet data convergence protocol PDCP layer; determining a first ciphertext, where the first ciphertext is obtained by encrypting the plurality of data units; and outputting a first protocol data unit PDU that includes the first ciphertext.

Based on this solution, the transmitting end can encrypt the data unit at the first protocol layer. Because the first protocol layer is located at a lower layer of the PDCP layer, or is a lower-layer protocol layer, it may be considered that the solution in this application encrypts the data unit at the lower-layer protocol layer. In addition, because the PDU at the higher layer protocol layer usually functions as a data unit at the lower layer protocol layer, it may be considered that the solution in this application encrypts the PDU (including a user plane PDU and a control plane PDU) at the higher layer protocol layer at the first protocol layer, thereby preventing information carried by the data unit from being leaked, preventing an unauthorized device from changing the data unit, and improving security performance of data transmission and user experience.

In a possible design, the determining the first ciphertext includes: determining ciphertexts respectively corresponding to the plurality of data units, and determining the first verification code based on the ciphertexts respectively corresponding to the plurality of data units.

Based on this possible design, the first communications apparatus first determines the ciphertexts respectively corresponding to the plurality of data units, and then determines the first ciphertext based on the ciphertexts respectively corresponding to the plurality of data units. Therefore, after obtaining the data unit, the first communications apparatus may immediately perform the encryption processing. There is no need to wait until the first protocol layer entity assembles the first PDU and then perform the encryption, thereby reducing a data processing delay and improving service performance.

In a possible design, the first ciphertext is a set of ciphertexts each corresponding to a plurality of data units.

In a possible design, the plurality of data units include a first data unit. The ciphertext corresponding to the first data unit is obtained based on the first data unit and at least one of the following: a key, a value corresponding to the first PDU, a transmission direction of the first PDU, a hybrid automatic repeat request HARQ identifier corresponding to the first PDU, a logical channel identifier LCID corresponding to the first data unit, a radio bearer identifier corresponding to the first data unit, a type parameter of the first data unit, or a key stream length, where the value corresponding to the first PDU is used to identify the first PDU, or is used to indicate a time domain and/or a frequency domain location at which the first PDU is located.

In a possible design, the plurality of data units include the first data unit, the first PDU includes a first sub-PDU, and the ciphertext corresponding to the first data unit is located in the first sub-PDU; and a subheader of the first sub-PDU includes the first information, where the first information is used to indicate that the first data unit is encrypted.

Based on this possible design, the transmitting end may indicate which data units are encrypted, so that the receiving end can clearly identify the data units that need to be decrypted, thereby obtaining the plaintext based on the correct data units, and improving data transmission efficiency.

In a possible design, the determining a plurality of data units at the first protocol layer includes: determining the plurality of data units at the first protocol layer based on at least one logical channel identifier LCID or at least one logical channel group LCG identifier, where a data unit corresponding to at least one LCID or LCG identifier is a data unit that needs to be encrypted. The at least one LCID includes an LCID of each of the plurality of data units, or the at least one LCG identifier includes an LCG identifier of each of the plurality of data units.

Based on this possible design, when the at least one LCID or LCG identifier is defined by a protocol or preconfigured, both the transmitting end and the receiving end may determine, based on the at least one LCID or LCG identifier, the data units that need to be encrypted/decrypted, so that the transmitting end does not need to send information to the receiving end to indicate which data units are encrypted, thereby saving signaling overheads.

In a possible design, the determining the first ciphertext includes: determining a second input parameter, and determining the first ciphertext based on the second input parameter, where the second input parameter includes the first bitstream and at least one of the following: a key, a value corresponding to the first PDU, a transmission direction of the first PDU, a hybrid automatic repeat request HARQ identifier corresponding to the first PDU, or a keystream length. The first bitstream is a set of a plurality of data units, or the first bitstream is a set of sub-PDUs in which the plurality of data units are located. The value corresponding to the first PDU is used to identify the first PDU, or used to indicate a time domain and/or a frequency domain location at which the first PDU is located.

Based on this possible design, because the first bitstream is a set of a plurality of data units, or the first bitstream is a set of sub-PDUs in which the plurality of data units are located, an encryption algorithm operation needs to be performed only once in a process of determining the first ciphertext, thereby reducing calculation overheads. In addition, when the first bitstream is the set of sub-PDUs in which the plurality of data units are located, sub-headers corresponding to the plurality of data units are also encrypted, thereby further improving security performance.

In a possible design, the plurality of data units are all data units in the first PDU, the header of the first PDU includes second information, and the second information is used to indicate that the first PDU or all data units in the first PDU are encrypted.

In a possible design, the first PDU is located in a first transport block TB; the plurality of data units are all data units in the first PDU, and the method further includes: determining scheduling information of the first TB, where the scheduling information includes third information, and the third information is used to indicate that a PDU included in the first TB or all data units in the PDU need to be encrypted.

In a possible design, the plurality of data units are some data units in the first PDU, the header of the first PDU includes fourth information, and the fourth information is used to indicate that the plurality of data units or the sub-PDUs in which the plurality of data units are located are encrypted.

Based on the foregoing three possible designs, the transmitting end may indicate which data units are encrypted, so that the receiving end can clearly identify which data units need to be decrypted, thereby obtaining a plaintext based on correct data units, and improving data transmission efficiency.

In a possible design, when the value corresponding to the first PDU is used to identify the first PDU, the value corresponding to the first PDU is a sequence number SN or a count number COUNT; or when the value corresponding to the first PDU is used to indicate a time domain and/or a frequency domain location at which the first PDU is located, the value corresponding to the first PDU is any one of the following: a system frame number SFN at which the first PDU is located, a value obtained based on an SFN and a hyper system frame number H-SFN at which the first PDU is located, an index of a time domain resource at which the first PDU is located, or a value of a time-frequency resource indication field, where the value of the time-frequency resource indication field indicates a time-frequency resource used to carry the first PDU.

In a possible design, the first protocol layer is a media access control MAC layer, and the data unit includes a MAC service data unit SDU or a MAC control element CE.

According to a fourth aspect, a data processing method is provided. The method may be performed by a second communications apparatus, or may be performed by a module (for example, a processor, a chip, or a chip system) applied to the second communications apparatus, or may be implemented by a logical node, a logical module, or software that can implement all or some functions of the second communications apparatus. The method includes: receiving a first protocol data unit PDU, where the first PDU includes a first ciphertext, the first ciphertext is obtained by encrypting a plurality of data units at a first protocol layer, and the first protocol layer is a lower layer protocol layer of a packet data convergence protocol PDCP layer; and decrypting the first ciphertext. For technical effects brought by the fourth aspect, refer to the technical effects brought by the third aspect. Details are not described herein again.

In a possible design, the first ciphertext is a set of ciphertexts each corresponding to a plurality of data units.

In a possible design, the plurality of data units include a first data unit, and the first ciphertext includes ciphertext corresponding to the first data unit. The decrypting the first ciphertext includes: determining the first keystream based on the third input parameter, and performing an exclusive OR operation on the first keystream and the ciphertext corresponding to the first data unit to obtain the first data unit. The third input parameter includes at least one of the following: a key, a value corresponding to the first PDU, a transmission direction of the first PDU, a hybrid automatic repeat request HARQ identifier corresponding to the first PDU, an LCID corresponding to the first data unit, a radio bearer identifier corresponding to the first data unit, a type parameter of the first data unit, or a keystream length, where the value corresponding to the first PDU is used to identify the first PDU, or is used to indicate a time domain and/or a frequency domain location where the first PDU is located.

In a possible design, the plurality of data units include a first data unit, the first PDU includes a first sub-PDU, and the ciphertext corresponding to the first data unit is located in the first sub-PDU; a subheader of the first sub-PDU includes the first information, where the first information is used to indicate that the first data unit is encrypted.

In a possible design, the method further includes: determining at least one logical channel identifier LCID or at least one logical channel group identifier LCG, where a data unit corresponding to the at least one LCID or LCG identifier is a data unit that needs to be encrypted. The at least one LCID includes an LCID of each of the plurality of data units, or the at least one LCG identifier includes an LCG identifier of each of the plurality of data units.

In a possible design, the decrypting the first ciphertext includes: determining a second keystream based on a fourth input parameter, and performing an exclusive OR operation on the second keystream and the first ciphertext to obtain the first bitstream, where the fourth input parameter includes at least one of the following: a key, a value corresponding to the first PDU, a transmission direction of the first PDU, a HARQ identifier corresponding to the first PDU, or a keystream length, and the value corresponding to the first PDU is used to identify the first PDU or indicate a time domain and/or frequency domain location where the first PDU is located. The first bitstream is a set of a plurality of data units, or the first bitstream is a set of sub-PDUs in which the plurality of data units are located.

In a possible design, the plurality of data units are all data units in the first PDU, the header of the first PDU includes second information, and the second information is used to indicate that the first PDU or all data units in the first PDU are encrypted.

In a possible design, the first PDU is located in a first transport block TB; the plurality of data units are all data units in the first PDU; and the method further includes: determining scheduling information for the first TB, where the scheduling information includes third information, and the third information is used to indicate that a PDU included in the first TB or all data units in the PDU need to be encrypted.

In a possible design, the plurality of data units are some data units in the first PDU, the header of the first PDU includes fourth information, and the fourth information is used to indicate that the plurality of data units or the sub-PDUs in which the plurality of data units are located are encrypted.

In a possible design, when the value corresponding to the first PDU is used to identify the first PDU, the value corresponding to the first PDU is a sequence number SN or a count number COUNT; and when the value corresponding to the first PDU is used to indicate a time domain and/or a frequency domain location at which the first PDU is located, the value corresponding to the first PDU is any one of the following: a system frame number SFN at which the first PDU is located, a value obtained based on an SFN and a hyper system frame number H-SFN at which the first PDU is located, an index of a time domain resource at which the first PDU is located, or a value of a time-frequency resource indication field, where the value of the time-frequency resource indication field indicates a time-frequency resource used to carry the first PDU.

In a possible design, the first protocol layer is a media access control MAC layer, and the data unit includes a MAC service data unit SDU or a MAC control element CE.

For technical effects brought by any possible design in the fourth aspect, refer to technical effects brought by corresponding designs in the second aspect. Details are not described herein again.

According to a fifth aspect, a communications apparatus is provided, configured to implement the methods. The communications apparatus includes modules, units, or means (means) corresponding to the implementations. The modules, units, or means may be implemented by hardware or software, or implemented by hardware by executing corresponding software. The hardware or software includes one or more modules or units corresponding to the functions.

In some possible designs, the communication apparatus may include a processing module and a transceiver module. The processing module may be configured to implement the processing functions in any one of the foregoing aspects and any possible implementation of the foregoing aspects. The transceiver module may include a receiving module and a sending module, which are respectively configured to implement the receiving function and the sending function in any one of the foregoing aspects and any possible implementation of the foregoing aspects.

In some possible designs, the transceiver module may include a transceiver circuit, a transceiver machine, a transceiver, or a communication interface.

According to a sixth aspect, a communication apparatus is provided, including a processor and a memory. The memory is configured to store computer instructions, and when the processor executes the instructions, the communication apparatus is enabled to perform the method according to any one of the aspects.

According to a seventh aspect, a communication apparatus is provided, including a processor and a communication interface. The communication interface is configured to communicate with a module outside the communication apparatus. The processor is configured to execute a computer program or an instruction, so that the communication apparatus performs the method according to any one of the aspects.

According to an eighth aspect, a communication apparatus is provided, including at least one processor. The processor is configured to execute a computer program or an instruction stored in a memory, so that the communication apparatus performs the method according to any one of the aspects. The memory may be coupled to the processor, or may be independent of the processor.

According to a ninth aspect, a communication apparatus (for example, the communication apparatus may be a chip or a chip system) is provided. The communication apparatus includes a processor, configured to implement the functions involved in any one of the first aspect to the sixth aspect.

In some possible designs, the communication apparatus includes a memory, and the memory is configured to store necessary program instructions and data.

In some possible designs, when the apparatus is a chip system, the chip system may be formed by a chip, or may include a chip and another discrete component.

It may be understood that the communication apparatus provided in the fifth aspect to the ninth aspect may be the first communication apparatus in the first aspect or the third aspect, or may be modules or units (for example, a chip, a chip system, or a circuit) that are in a one-to-one correspondence with the first communication apparatus and that perform the method/operation/step/action described in the first aspect or the third aspect, or may be a module or unit that can be used in conjunction with the first communication apparatus, or may be a logical node, a logical module, or software that can implement all or some of the functions of the first communication apparatus; or, the communication apparatus may be the second communication apparatus in the second aspect or the fourth aspect, or may be modules or units (for example, a chip, a chip system, or a circuit) that are in a one-to-one correspondence with the second communication apparatus and that perform the method/operation/step/action described in the second aspect or the fourth aspect, or may be a module or unit that can be used in conjunction with the second communication apparatus, or may be a logical node, a logical module, or software that can implement all or some of the functions of the second communication apparatus.

It may be understood that when the communication apparatus provided in any one of the seventh aspect to the ninth aspect is a chip, a sending action/function of the communication apparatus may be understood as outputting information, and a receiving action/function of the communication apparatus may be understood as inputting information.

According to a tenth aspect, a computer-readable storage medium is provided. The computer-readable storage medium stores a computer program or instructions, and when the computer program or instructions are run on a communication apparatus, the communication apparatus is enabled to perform the method according to any one of the first aspect to the sixth aspect.

According to an eleventh aspect, a computer program product including instructions is provided. When the computer program product is run on a communication apparatus, the communication apparatus is enabled to perform the method according to any one of the first aspect to the sixth aspect.

According to a twelfth aspect, a communications system is provided. The communications system includes a first communication apparatus and a second communication apparatus. The first communication apparatus is configured to perform the method according to the first aspect or the third aspect or any possible design thereof, and the second communication apparatus is configured to perform the method according to the second aspect or the fourth aspect or any possible design thereof.

For technical effects brought by any design manner in the fifth aspect to the twelfth aspect, refer to technical effects brought by different design manners in the first aspect to the fourth aspect. Details are not described herein again.

### Description of Drawings

FIG. 1 is a schematic structural diagram of a user plane protocol stack according to this application;
FIG. 2 is a schematic structural diagram of a MAC PDU according to this application;
FIG. 3 is a schematic flowchart of a procedure in which a terminal accesses a network according to this application;
FIG. 4 is a schematic flowchart of integrity protection/verification according to this application;
FIG. 5 is a schematic flowchart of an encryption/decryption process according to this application;
FIG. 6 is a schematic structural diagram of a pseudo base station according to this application;
FIG. 7 is a schematic diagram of a pseudo base station attack according to this application;
FIG. 8 is a schematic structural diagram of a communication system according to this application;
FIG. 9 is a schematic flowchart of a data processing method according to this application;
FIG. 10 is a schematic flowchart of a process of determining a verification code according to this application;
FIG. 11 is a schematic flowchart of another integrity protection/verification process according to this application;
FIG. 12 is a schematic structural diagram of a subheader of a sub PDU according to this application;
FIG. 13 is a schematic flowchart of a process of determining another verification code according to this application;
FIG. 14 is a schematic flowchart of integrity protection/verification according to this application;
FIG. 15 is a schematic flowchart of another data processing method according to this application;
FIG. 16 is a schematic flowchart of another encryption/decryption method according to this application;
FIG. 17 is a schematic structural diagram of a communications apparatus according to this application;
FIG. 18 is a schematic structural diagram of another communications apparatus according to this application;
FIG. 19 is a schematic structural diagram of still another communication apparatus according to this application.

### Description of embodiments

In the descriptions of this application, unless otherwise specified, "/" represents an "or" relationship between associated objects. For example, A/B may represent A or B. The term "and/or" in this application is merely an association relationship for describing associated objects, and indicates that three relationships may exist. For example, A and/or B may represent the following three cases: Only A exists, both A and B exist, and only B exists, where A and B may be singular or plural.

In the descriptions of this application, unless otherwise specified, "a plurality of" means two or more. "At least one of the following items (pieces)" or a similar expression thereof means any combination of these items, including any combination of a single item (piece) or a plurality of items (pieces). For example, "at least one of a, b, or c" may represent a, b, c, a-b, a-c, b-c, or a-b-c, where a, b, and c may be singular or plural.

In addition, to clearly describe the technical solutions in the embodiments of this application, terms such as "first" and "second" are used in the embodiments of this application to distinguish between identical or similar items that have basically the same functions or purposes. A person skilled in the art may understand that the terms such as "first" and "second" do not limit a quantity or an execution sequence, and the terms such as "first" and "second" do not necessarily indicate any difference.

In the embodiments of this application, the terms such as "example" or "for example" are used to indicate an example, an illustration, or a description. Any embodiment or design described as "example" or "for example" in the embodiments of this application should not be construed as being more preferred or having more advantages than another embodiment or design. On the contrary, the terms such as "example" or "for example" are used to present related concepts in a specific manner for ease of understanding.

It may be understood that the term "embodiment" mentioned throughout this specification means that particular features, structures, or characteristics associated with the embodiment are included in at least one embodiment of this application. Therefore, embodiments described in various places in this specification may not necessarily refer to the same embodiment. In addition, these particular features, structures, or characteristics may be combined in one or more embodiments in any suitable manner. It may be understood that the embodiments of this application do not necessarily mean that the sequence numbers of the processes indicate an order of execution, and the execution order of the processes should be determined according to their functions and internal logic, without limiting the implementation process of the embodiments of this application in any way.

It may be understood that, in this application, "when" and "if" each mean that a corresponding processing is performed under an objective condition, and do not limit time, nor require a determining action to be performed during implementation, nor imply any other limitation.

It may be understood that some optional features in embodiments of this application may be independently implemented in some scenarios without depending on another feature (for example, a solution on which the optional features are currently based), thereby resolving a corresponding technical problem and achieving a corresponding effect. Alternatively, in some scenarios, these optional features may be combined with another feature based on a requirement. Correspondingly, the apparatus provided in embodiments of this application may also implement these features or functions accordingly. Details are not described herein again.

In this application, unless otherwise specified, for parts that are the same or similar in embodiments, refer to each other. In the implementation methods in this application, unless otherwise specified or there is a logical conflict, terms and/or descriptions of different implementation methods are consistent and may be mutually referenced, and technical features in different implementation methods may be combined based on an internal logical relationship thereof, to form a new embodiment. The implementations of this application described below do not constitute a limitation on the protection scope of this application.

To facilitate understanding of the technical solutions in the embodiments of this application, the following first provides a brief introduction to related technologies in this application.

### 1. Layered protocol stack architecture:

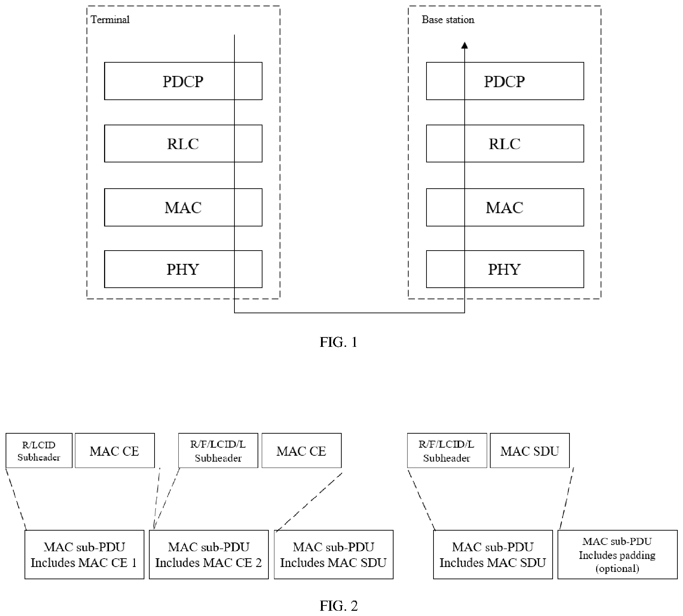

In a 5th generation (5th generation, 5G) new radio (new radio, NR) communications system, a user plane communication protocol stack architecture is shown in FIG. 1, and mainly includes a service data adaptation protocol (service data adaptation protocol, SDAP) layer (not shown in FIG. 1), a packet data convergence protocol (packet data convergence protocol, PDCP) layer, a radio link control (radio link control, RLC) layer, a media access control (media access control, MAC) layer, and a physical (physical, PHY) layer.

In an uplink (uplink, UL) transmission, data transmission is performed in the direction indicated by the arrows in FIG. 1. Referring to FIG. 1, at the transmitting end, data passes through the SDAP layer to reach the PDCP layer, and after being processed by the PDCP layer, the data is sequentially transmitted to the RLC layer, the MAC layer, and finally sent from the physical layer. At the receiving end, the data is processed in the reverse order of the processing at the transmitting end. In a downlink (downlink, DL) transmission, data transmission is performed in the opposite direction of the arrows shown in FIG. 1.

When data in a radio bearer (radio bearer, RB) passes through each protocol layer, the data needs to be processed by the corresponding functional entity at each protocol layer. For example, the data is processed by a PDCP entity at the PDCP layer, processed by an RLC entity at the RLC layer, and processed by a MAC entity at the MAC layer.

Data in wireless communication can be roughly divided into control signaling and user plane data. Further, the user plane data can be divided into a user plane protocol data unit (protocol data unit, PDU) and a user plane control PDU. The user plane data PDU is used to carry communication data, while the user plane control PDU is used to carry control information that assists in the transmission of the user plane data PDU.

For example, the user plane data PDU includes data PDUs at each protocol layer, such as an SDAP data PDU, a PDCP data PDU, an RLC data PDU, and a MAC sub-PDU (MAC subPDU) including a MAC service data unit (service data unit, SDU). The user plane control PDU includes control PDUs at each protocol layer, such as an SDAP control PDU, a PDCP control PDU, an RLC control PDU, and a MAC sub-PDU (MAC subPDU) including a MAC control element (control element, CE).

The MAC layer is used as an example. As shown in FIG. 2, a complete MAC PDU may be formed by cascading a MAC subPDU including a MAC SDU and a MAC subPDU including a MAC CE. The MAC SDU is an RLC PDU delivered at an RLC layer, and the MAC CE is information generated at the MAC layer.

Furthermore, as shown in Figure 2, the MAC subPDU includes a MAC subheader. Herein, R represents a reserved field, F indicates the size of the length field in the subheader, L denotes the length of the MAC CE or MAC SDU, and LCID is the logical channel identification (LCID) corresponding to the MAC CE or MAC SDU.

### 2. Air Interface Security Processing:

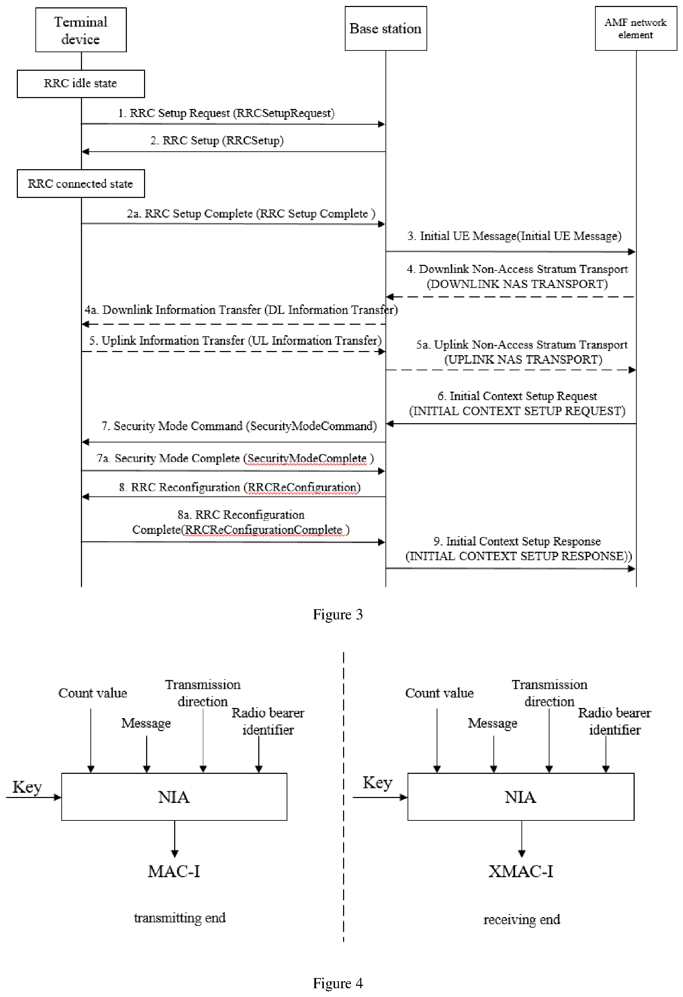

For example, in an NR system, the initial access process of a terminal device is illustrated in Figure 3. When the terminal device transitions from a Radio Resource Control (RRC) idle (RRC_IDLE) state to an RRC connected (RRC_CONNECTED) state, it needs to complete random access and interact with an access and mobility management function (AMF) network element through a non-access stratum (NAS) message. For instance, in step 6, the AMF network element sends the context of the terminal device to the base station, such as the PDU session context, security key, radio capabilities of the terminal device, security capabilities of the terminal device, and the like. After receiving the context of the terminal device, the base station may initiate a security mode, that is, perform step 7 by sending a security mode command to the terminal device.

After enabling security mode, the terminal device and the base station will perform secure processing on the data. Typically, secure processing includes encryption/decryption and integrity protection/integrity verification, where the transmitting end encrypts and/or applies integrity protection to the data packet, and the receiving end performs the corresponding decryption and/or integrity verification on the data packet.

### 1) Integrity protection/integrity verification:

The process of integrity protection and verification may include: the transmitting end calculates parameter A based on the data packet and parameters such as the key; the receiving end calculates parameter B based on the data packet and parameters such as the key. If parameters A and B are consistent, the integrity verification is passed.

For example, as shown in Figure 4, in an air interface integrity protection mechanism, the transmitting end uses parameters and data packets that change according to a certain pattern, and performs calculations according to specific rules to obtain a message integrity verification code (message authentication code for integrity, MAC-I), and then sends the data packet along with the MAC-I to the receiving end. The receiving end uses the same parameters and the same rules to calculate the expected message integrity verification code (expected message authentication code for integrity, XMAC-I), and then verifies the MAC-I and XMAC-I to determine whether the received data is intact, thereby achieving the purpose of protecting data integrity.

Referring to FIG. 4, input parameters used for integrity protection and verification include a key (KEY), a count value (COUNT), a message (MESSAGE), a transmission direction (DIRECTION), and a radio bearer identifier (BEARER). Descriptions of each parameter are shown in Table 1.

**Table 1**

| Parameter | Description |
|---|---|
| KEY | The integrity protection key can be obtained by the terminal device from the user service identity module (USIM), and the base station can calculate it using the root key stored in the unified data management (UDM) network element. |
| COUNT | The PDCP packet count, where there is one COUNT for uplink and one for downlink. When the uplink or downlink COUNT rolls over, it triggers a key update to prevent the generation of duplicate keystreams. |
| MESSAGE | The message code stream, which is the data packet itself. |
| DIRECTION | The transmission direction indicates uplink or downlink. A value of 0 represents uplink, which means from the terminal device to the base station, while a value of 1 represents downlink, which means from the base station to the terminal device. |
| BEARER | Identifier of the radio bearer |
| NIA | NR integrity algorithm (NR integrity algorithm, NIA) |
| MAC-I, XMAC-I | Integrity check code |

### (2) Encryption/decryption:

The encryption and decryption processes may include: an end of the transmitting side performing an operation based on parameters such as a key to change a data packet into ciphertext, and an end of the receiving side performing an inverse operation based on parameters such as a key to change the ciphertext into plaintext.

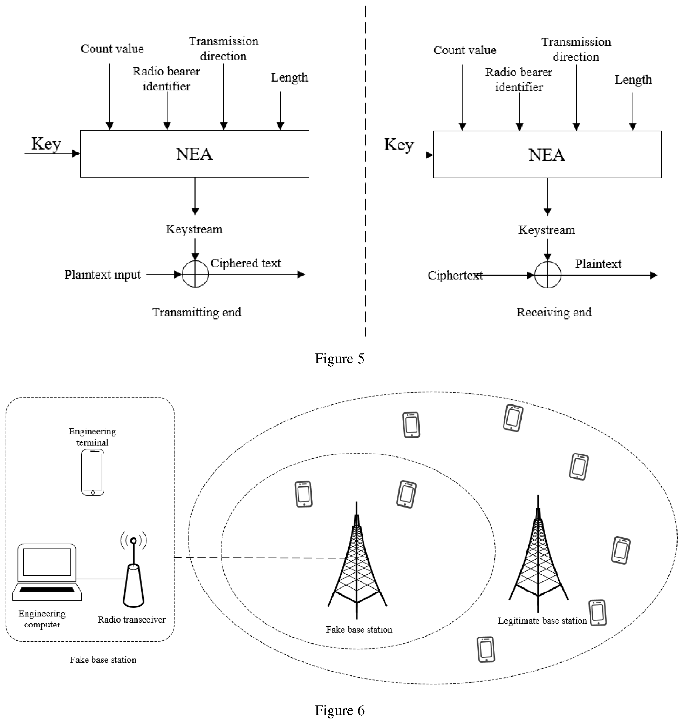

For example, as shown in Figure 5, in an air interface encryption/deencryption mechanism, the transmitting end generates a keystream (KEYSTREAMBLOCK) based on input parameters, and then performs an exclusive OR operation between the keystream and the input plaintext (PLAINTEXTBLOCK) to obtain the ciphertext (CIPHERTEXTBLOCK). At the receiving end, the same keystream is generated using the same input parameters as those at the transmitting end, and then the keystream is exclusive ORed with the ciphertext to obtain the plaintext. Here, NEA stands for NR Encryption Algorithm (NR encryption algorithm, NEA).

The input parameters include the encryption key (KEY), count value (COUNT), radio bearer identifier (BEARER), transmission direction (DIRECTION), and the length of the required keystream (LENGTH).

### 3. Pseudo base station attack:

A pseudo base station is an illegal base station typically composed of simple wireless devices and specialized open-source software. It can simulate a legitimate base station and send signaling to target terminals according to relevant protocols, thereby obtaining information related to the target terminals.

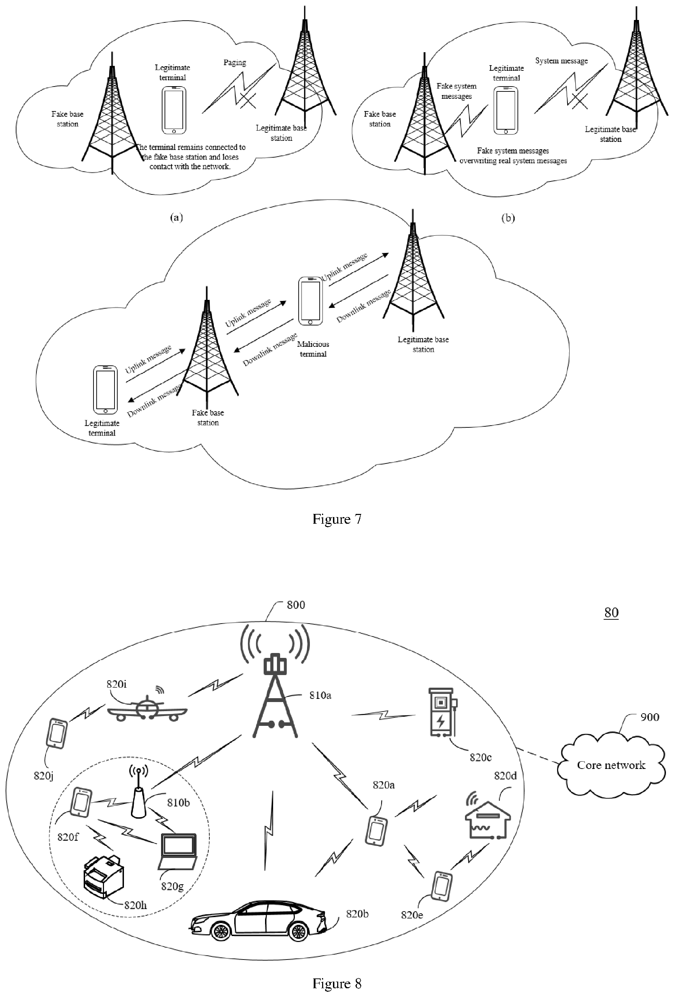

For example, as shown in (a) of Figure 6 or Figure 7, a network attacker may place a fake base station within the coverage area of the target base station, thereby forcing nearby terminal devices to perform cell reselection, location updates, and handovers. This action can deceive the terminal devices into receiving incorrect information, achieving the purpose of spreading viruses, conducting online fraud, and other malicious activities. In addition, the fake base station may intercept the communication content between the base station and the terminal devices, thereby eavesdropping on users' private data.

At the same time, while the fake base station is launching deceptive attacks on terminal devices, it also interferes with the normal communication between the network and the terminal devices, thereby affecting network performance. For example, as shown in (b) of Figure 7, when a terminal device accesses the fake base station, it may use incorrect system information provided by the fake base station, which can prevent the terminal device from being paged by the network and thus from accessing the network to function properly. Another example is that the system information may be intercepted and illegally tampered with by the fake base station, causing the terminal device to use incorrect paging parameters, and consequently, the terminal device cannot communicate normally with the legitimate base station, ultimately leading to handover failures, abnormal call drops, and other issues.

Moreover, as shown in (c) of Figure 7, after attracting the terminal device to camp on the rogue base station, the rogue base station can also use the malicious terminal to transparently transmit encrypted data between the legitimate terminal and the base station in a "relay" manner. For example, in the uplink, the rogue base station receives communication data from the legitimate terminal and transparently transmits it to the legitimate base station through the malicious terminal; in the downlink, the malicious terminal receives communication data from the legitimate base station and transparently transmits it to the legitimate terminal through the rogue base station. In this scenario, the legitimate terminal and the legitimate base station find it difficult to detect the presence of the rogue base station and the malicious terminal, thus making it possible for the rogue base station or the malicious terminal to carry out a man-in-the-middle attack.

Currently, the aforementioned security processing is performed at the PDCP layer and is limited to user plane PDUs at the PDCP layer, with no security processing applied to other user plane PDUs. However, many other user plane PDUs, apart from user plane data PDUs, may carry important control information. If these PDUs are exploited by rogue base stations or unauthorized terminals, which then forge or monitor these PDUs, it could lead to significant security risks. For instance, a rogue base station could use a man-in-the-middle attack method to transparently transmit upper-layer encrypted data while tampering with or forging lower-layer signaling, or by dropping packets, thereby affecting the user's service experience.

Based on this, this application provides a data processing method, which is capable of performing integrity protection on a data unit at a lower layer protocol layer of a PDCP layer, so that a receiving end can verify the integrity of the data unit, thereby identifying whether a man-in-the-middle attack exists, and then performing corresponding processing to improve a service experience of a user. In addition, a result of performing integrity protection on a plurality of data units may be a verification code (that is, the first verification code). Compared with a case in which each data unit corresponds to a verification code, this can reduce signaling overheads.

The technical solutions in the embodiments of this application may be applied to various communications systems. The communications system may be a 3rd Generation Partnership Project (3GPP) communications system, for example, a 4th generation (4th generation, 4G) system such as a long term evolution (long term evolution, LTE) system, a 5G system such as an NR system, a system for hybrid networking of LTE and 5G, a non-terrestrial network (non-terrestrial network, NTN), or another next generation communications system. The communications system may also be a non-3GPP communications system, which is not limited.

The communication system to which the foregoing is applicable is merely an example for illustration, and a communication system to which the present application is applicable is not limited thereto. The communication system provided in this application does not impose any limitation on the solutions in this application. This is described herein in a unified manner, and details are not described below again.

FIG. 8 shows a possible and non-limitative schematic diagram of a system. As shown in FIG. 8, a communications system 80 includes a radio access network (radio access network, RAN) 800 and a core network (core network, CN) 900. The RAN 800 includes at least one RAN node (810a and 810b in FIG. 8, collectively referred to as 810) and at least one terminal (820a-820j in FIG. 8, collectively referred to as 820) in FIG. 8. The RAN 800 may further include other RAN nodes, for example, a wireless relay device and/or a wireless backhaul device (not shown in FIG. 8). The terminal 820 is wirelessly connected to the RAN node 810. The RAN node 810 is connected to the core network 900 in a wireless or wired manner. The core network device in the core network 900 and the RAN node 810 in the RAN 800 may be different physical devices, or may be a same physical device integrating logical functions of the core network and logical functions of the radio access network.

The RAN 800 may be a 3GPP-related cellular system, such as a 4G, 5G mobile communication system, or a future-oriented evolved system (e.g., a sixth generation (6G) mobile communication system). The RAN 800 may also be an open radio access network (open RAN, O-RAN, or ORAN), a cloud radio access network (cloud radio access network, CRAN), or a wireless fidelity (WiFi) system. The RAN 800 may further be a communication system that integrates two or more of the above-mentioned systems.

The RAN node 810, sometimes also referred to as an access network device, RAN entity, or access node, constitutes a part of the communication system and is used to assist terminals in achieving wireless access. Multiple RAN nodes 810 in the communication system 80 may be nodes of the same type or nodes of different types. In some scenarios, the roles of the RAN node 810 and the terminal 820 are relative to each other. For example, in Figure 8, network element 820i may be a helicopter or an unmanned aerial vehicle (UAV) that can be configured as a mobile base station, where for terminals 820j that access the RAN 800 through network element 820i, network element 820i functions as a base station; however, for the base station 810a, network element 820i functions as a terminal. The RAN node 810 and the terminal 820 are sometimes collectively referred to as communication devices. For instance, network elements 810a and 810b in Figure 8 can be understood as communication devices with base station functions, while network elements 820a-820j can be understood as communication devices with terminal functions.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communications system, a base station in a future mobile communications system, an access node in a WiFi system, or the like. The RAN node may be a macro base station (for example, 810a in FIG. 8), a micro base station or an indoor station (for example, 810b in FIG. 8), a relay node or a donor node, or a radio controller in a CRAN scenario. Optionally, the RAN node may alternatively be a server, a wearable device, a vehicle, an in-vehicle device, or the like. For example, the access network device in the vehicle to everything (vehicle to everything, V2X) technology may be a road side unit (road side unit, RSU). All or some of the functions of the RAN node in this application may be implemented by software running on hardware, or by virtualized functions instantiated on a platform (for example, a cloud platform). The RAN node in this application may alternatively be a logical node, a logical module, or software that can implement all or some of the functions of the RAN node.

In another possible scenario, multiple RAN nodes collaborate to assist a terminal in achieving wireless access, where different RAN nodes respectively implement some functions of a base station. For example, the RAN node may be a central unit (CU), a distributed unit (DU), a CU-control plane (control plane, CP), a CU-user plane (user plane, UP), a radio unit (RU), or the like. The CU and DU may be separately disposed, or may also be included in the same network element, for example, in a baseband unit (BBU). The RU may be included in a radio frequency device or a radio frequency unit, for example, included in a remote radio unit (RRU), an active antenna unit (AAU), or a remote radio head (RRH).

In different systems, the CU (or the CU-CP and the CU-UP), the DU, or the RU may also have different names, but a person skilled in the art can understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, this application uses the CU, the CU-CP, the CU-UP, the DU, and the RU as examples for description. Any one of the units of the CU (or the CU-CP, the CU-UP), the DU, and the RU in this application may be implemented by using a software module, a hardware module, or a combination of a software module and a hardware module.

The terminal may be a user-side device having a wireless transceiver function, or may be a chip or a chip system disposed in the device. The terminal may also be referred to as user equipment (user equipment, UE), a terminal device, an access terminal, a subscriber unit, a subscriber station, a mobile station (mobile station, MS), a mobile console, a remote station, a remote terminal, a mobile terminal (mobile terminal, MT), a user terminal, a wireless communication device, a user agent, a user apparatus, or the like.

The terminal can be widely used in various scenarios, such as device-to-device (D2D), vehicle to everything (V2X) communication, machine-type communication (MTC), Internet of Things (IoT), (virtual reality, VR), augmented reality, industrial control (industrial control), self driving (self driving), remote medical (remote medical), smart grid (smart grid), smart furniture, smart office, smart wearable, smart transportation, smart home (smart home), transportation safety (transportation safety), smart city (smart city), and the like. The terminal may be a mobile phone, a tablet computer, a computer with a wireless transceiver function, a wearable device, a vehicle, an unmanned aerial vehicle (UAV), a helicopter, an airplane, a ship, a robot, a robotic arm, a smart home device, a vehiclemounted terminal, an unmanned aerial vehicle (UAV), or the like. An embodiment of this application does not limit the device form of the terminal.

It should be noted that the communication system described in the embodiments of this application is intended to describe the technical solutions in the embodiments of this application more clearly, and does not constitute a limitation on the technical solutions provided in the embodiments of this application. A person of ordinary skill in the art may learn that, with evolution of network architectures and emergence of new service scenarios, the technical solutions provided in the embodiments of this application are also applicable to similar technical problems.

The following describes the data processing method provided in the embodiments of this application with reference to the communication system shown in FIG. 8. It should be noted that, in the following embodiments of this application, names of messages between communication apparatuses, names of parameters, or names of information in the embodiments are merely examples, and may be other names in other embodiments. This is not specifically limited in the method provided in this application.

It may be understood that, in the embodiments of this application, the communication apparatus may perform some or all of the steps in the embodiments of this application. These steps or operations are merely examples, and the embodiments of this application may further perform other operations or variations of various operations. In addition, the steps may be performed in different orders than those presented in the embodiments of this application, and there may be no need to perform all the operations in the embodiments of this application.

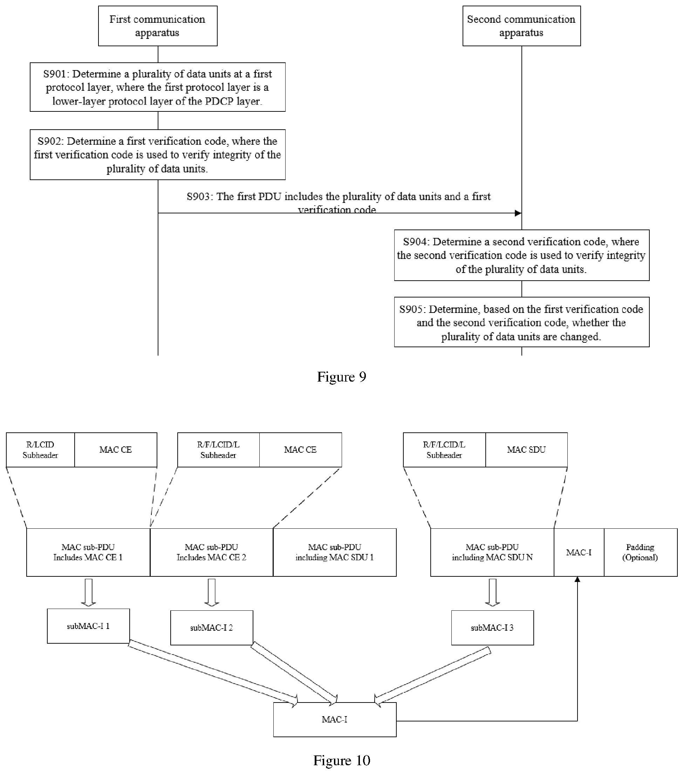

Referring to FIG. 9, it is a flowchart of a data processing method according to an embodiment of this application. As shown in FIG. 9, the data processing method may include the following steps:
S901. A first communications apparatus determines a plurality of data units at a first protocol layer.

For example, the first communications apparatus may be understood as a transmitting end. The first communications apparatus may be a terminal in the communications system shown in FIG. 8, or a component (for example, a processor, a circuit, a chip, or a chip system) of the terminal, or a logical module or software that can implement all or some functions of the terminal; or the first communications apparatus may be a RAN node in the communications system shown in FIG. 8, or a component (for example, a processor, a circuit, a chip, or a chip system) of the RAN node, or a logical module or software that can implement all or some functions of the RAN node.

The first protocol layer is a lower-layer protocol layer of the PDCP layer. For example, the first protocol layer provides at least one of the following functions:
(1) Mapping between a logical channel and a transport channel;
2) Multiplexing the first protocol layer SDUs belonging to one or more logical channels into a transport block (transport block, TB) at the physical layer for transmission on a transport channel, or demultiplexing the first protocol layer SDUs belonging to one or more logical channels received from the physical layer TB on a transport channel;
3) Scheduling information reporting;
4) Error correction through hybrid automatic repeat request (HARQ);
5) Handling priorities among terminals through dynamic scheduling;
6) Handling priorities among logical channels of a terminal through logical channel priorities;
7) Perform a priority among overlapping resources for an end;
8) Data padding.

For example, the first protocol layer that provides at least one of the above eight functions may be referred to as a MAC layer, and correspondingly, the data unit of the first protocol layer may be a MAC CE or a MAC SDU. In addition, the MAC layer may also have other names, and a name of the MAC layer is not specifically limited in this application.

In addition to the MAC layer, the first protocol layer may also be another protocol layer at a lower layer of the PDCP, such as an RLC layer, or the like. The first protocol layer is not specifically limited in this application.

In a possible implementation, the plurality of data units may be understood as data units for which integrity protection needs to be performed. For example, there may be a plurality of solutions for implementing integrity protection, for example, an integrity protection solution based on MAC-I (referring to the integrity protection mechanism at the PDCP layer mentioned above), integrity protection based on a digital signature, integrity protection based on a cyclic redundancy check (cyclic redundancy check, CRC), integrity protection based on a hash (HASH) function, or the like.

For example, the integrity protection scheme based on MAC-I may be understood as an integrity protection scheme based on a keyed hash function, which can not only be used for integrity protection, but also protect data authenticity. The CRC scheme may be applicable to a case where there is a relatively small amount of data. The hash function scheme may be applicable to a case where there is a relatively large amount of data. The following embodiments of this application describe an example of performing integrity protection on a data unit based on MAC-I.

In a possible implementation, when a data unit at the first protocol layer is a PDU of an upper protocol layer (referred to as a second protocol layer) of the first protocol layer, for example, when the data unit is a MAC SDU, the entity at the second protocol layer may send indication information to the entity at the first protocol layer when delivering the data unit to the entity at the first protocol layer, to indicate that the data unit needs to perform integrity protection.

In another possible implementation, when a data unit at the first protocol layer is a data unit generated by an entity at the first protocol layer, for example, when the data unit is a MAC CE, the first protocol layer may determine, based on an implementation, whether integrity protection needs to be performed on the data unit. For example, if the data unit carries information indicating a relatively high importance level, a relatively high security risk, or a relatively high security requirement, integrity protection needs to be performed on the data unit; or if the data unit carries information indicating a relatively low importance level, a relatively low security risk, or a relatively low security requirement, integrity protection does not need to be performed on the data unit.

As another possible implementation, the protocol may predefine or the RAN node may preconfigure at least one LCID or at least one logical channel group (logical channel group, LCG) identifier, where a data unit corresponding to the at least one LCID or LCG identifier is the data unit for which integrity protection is required. In this scenario, the first communications apparatus may determine the plurality of data units based on the at least one LCID or LCG identifier.

For example, the first communications apparatus may first determine an LCID or an LCG identifier of a data unit. If the LCID of the data unit belongs to the at least one LCID, and/or the LCG identifier of the data unit belongs to the at least one LCG identifier, integrity protection needs to be performed on the data unit. In other words, the at least one LCID includes an LCID of each of the plurality of data units, or the at least one LCG identifier includes an LCG identifier of each of the plurality of data units.

For example, when a data unit at the first protocol layer is a PDU at the second protocol layer, the first protocol layer is a MAC layer, and the second protocol layer is an RLC layer, the LCID of the data unit is an identifier of a logical channel used when an entity at the RLC layer hands over the data unit to an entity at the MAC layer, or the LCID of the data unit is an identifier of a logical channel used to transmit the data unit between the entity at the RLC layer and the entity at the MAC layer.

When a data unit at the first protocol layer is a data unit generated by an entity at the first protocol layer, for example, when the data unit is a MAC CE, the LCID of the data unit may be determined based on a type or a function of the data unit. For example, using the data unit being a MAC CE as an example, the types of the MAC CE may include but are not limited to: a buffer status report (buffer status report, BSR), a discontinuous reception (discontinuous reception, DRX) command, a terminal contention resolution identifier (UE contention resolution identity), a timing advance (timing advance, TA) command, and the like. MAC CEs of different types have different LCIDs.

Optionally, when the at least one LCID or the at least one LCG identifier is configured by the RAN node, if the first communications apparatus is a terminal, the terminal receives, from the RAN node, the information used to indicate the at least one LCID or LCG identifier; or if the first communications apparatus is a RAN node, the first communications apparatus sends, to the terminal, the information used to indicate the at least one LCID or LCG identifier.

For example, the information used to indicate the at least one LCID or LCG identifier may be carried in broadcast information, system information, or RRC signaling. This is not specifically limited in this application.

S902. The first communications apparatus determines a first verification code.

The first verification code is used to verify integrity of the plurality of data units, or in other words, the first verification code is used to protect integrity of the plurality of data units.

It should be noted that the verification code in the embodiments of this application may also be referred to as a MAC-I, an integrity verification code, an integrity authentication code, an integrity authentication code, verification information, or the like. Certainly, the verification code may also have another name, and a name of the verification code is not specifically limited in this application.

Optionally, the length of the first verification code is variable, or the first verification code may have a plurality of length values. The specific length may be predefined by a protocol, or the first communications apparatus may indicate the length of the first verification code to the receiving end, or the length may be pre-negotiated between the first communications apparatus and the receiving end.

In a possible implementation, the first communications apparatus determines the first verification code based on the plurality of data units. A specific implementation will be described in detail in subsequent embodiments, and details are not described herein.

S903: The first communications apparatus outputs the first PDU. Correspondingly, the second communications apparatus receives the first PDU. The first PDU includes the plurality of data units and the first verification code.

For example, the second communications apparatus may be understood as a receiving end. The second communications apparatus may be a RAN node in the communications system shown in FIG. 8, or a component (for example, a processor, a circuit, a chip, or a chip system) of the RAN node, or a logical module or software that can implement all or a part of functions of the RAN node; or the second communications apparatus may be a terminal in the communications system shown in FIG. 8, or a component (for example, a processor, a circuit, a chip, or a chip system) of the terminal, or a logical module or software that can implement all or a part of functions of the terminal.

It may be understood that the first PDU is a PDU at the first protocol layer. For example, when the first protocol layer is a MAC layer, the first PDU may also be referred to as a first transport block (transport block, TB).

Optionally, the plurality of data units may be some or all data units of the first PDU. That is, in addition to the plurality of data units, the first PDU may include other data units or may not include other data units. When the first PDU further includes other data units, these other data units may be understood as data units for which integrity protection is not performed.

In a possible implementation, the outputting the first PDU by the first communications apparatus may include: sending the first PDU by the first communications apparatus to a second communications apparatus. The receiving the first PDU by the second communications apparatus may include: receiving the first PDU from the first communications apparatus by the second communications apparatus. In this case, the outputting action may be implemented by a radio frequency device (for example, a radio frequency chip) of the first communications apparatus.

In another possible implementation, the outputting the first PDU by the first communication apparatus may include: the first protocol layer entity of the first communication apparatus delivering the first PDU to the third protocol layer entity of the first communication apparatus. Here, the third protocol layer entity is an entity of a lower protocol layer (such as a physical layer) of the first protocol layer. In this case, the outputting action may be implemented by a baseband device (such as a baseband processor) of the first communication apparatus.

S904: The second communication apparatus determines the second verification code.

The second verification code is used to verify the integrity of the plurality of data units mentioned above. For example, the second verification code is used to verify the integrity of the multiple data units in the first PDU received by the second communication apparatus.

In a possible implementation, the second communication apparatus determines the second verification code based on the plurality of data units received in the first PDU. The specific implementation will be described in detail in subsequent embodiments, and will not be elaborated upon here.

S905: The second communication apparatus determines whether the plurality of data units have been changed based on the first verification code and the second verification code. The alteration of the plurality of data units may include changes caused by transmission errors or malicious modifications, among other scenarios.

In a possible implementation, if the first verification code and the second verification code are the same, it indicates that the plurality of data units have not been altered; if the first verification code and the second verification code are different, it indicates that the plurality of data units have been altered.

In a possible implementation, when the second communication apparatus determines that the plurality of data units have been altered, the second communication apparatus may discard the plurality of data units and request the first communication apparatus to perform a retransmission.

Optionally, under the CU-DU separation architecture, the RAN node may be a DU, that is, the functions of the RAN node in this embodiment of this application may be implemented by the DU.

Based on the foregoing solution, the transmitting end can perform integrity protection on the data unit at the first protocol layer, because the first protocol layer is usually located at a lower layer than the PDCP layer, or is usually a lower-layer protocol layer. Therefore, the solution of this application performs integrity protection on the data unit at the lower-layer protocol, so that the receiving end can perform integrity verification on the data unit at the lower-layer protocol, thereby identifying whether a malicious attack exists, and then taking corresponding processing measures to improve the user's service experience. Since the PDU at the higher layer protocol is usually used as the data unit at the lower layer protocol, it can be considered that the solution of this application performs integrity protection on the PDU (including the user plane PDU and the control plane PDU) at the higher layer protocol at the first protocol layer, thereby preventing pseudo base stations or unauthorized terminals from exploiting these PDUs, and improving the security performance of data transmission. In addition, the result of performing integrity protection on a plurality of data units is an integrity check value (i.e., the first integrity check value). Compared with the case where each data unit corresponds to an integrity check value, this method can reduce signaling overhead.

The foregoing has described an overall procedure of the data processing method provided in this application. The following describes specific implementations in which the first communications apparatus determines the first verification code in step 902 and the second communications apparatus determines the second verification code in step S904. For example, the first communications apparatus may determine the first verification code in the following two manners:
Manner 1: The first communications apparatus determines verification codes respectively corresponding to the plurality of data units, and then determines the first verification code based on the verification codes respectively corresponding to the plurality of data units.

For example, the verification codes respectively corresponding to the plurality of data units may be referred to as sub verification codes (for example, recorded as sub MAC-I). Using an example in which the plurality of data units are the data unit 1, the data unit 2, and the data unit 3, the first communications apparatus first determines verification codes respectively corresponding to the three data units (recorded as sub verification code 1, sub verification code 2, and sub verification code 3), and then determines the first verification code based on the sub verification code 1, the sub verification code 2, and the sub verification code 3.

For example, as shown in FIG. 10, an example in which the first protocol layer is a MAC layer, and the plurality of data units include a MAC CE 1, a MAC CE 2, and a MAC SDU N is used. The first communications apparatus may first determine a sub MAC-I 1 corresponding to the MAC CE 1, a sub MAC-I 2 corresponding to the MAC CE 2, and a MAC-I 3 corresponding to the MAC SDU N, and then determine the first verification code (represented as MAC-I in FIG. 10) based on the sub MAC-I 1, the sub MAC-I 2, and the sub MAC-I 3.

In a possible implementation, an example in which the plurality of data units include the first data unit is used. The verification code corresponding to the first data unit is obtained based on the first data unit and at least one of the following. In other words, the input parameter for performing integrity protection on the first data unit includes the first data unit and at least one of the following: a key (or referred to as an integrity protection key), a value corresponding to the first PDU, a transmission direction of the first PDU, a HARQ identifier corresponding to the first PDU, an LCID corresponding to the first data unit, a radio bearer identifier corresponding to the first data unit, or a type parameter of the first data unit.

For example, the terminal may obtain the integrity protection key from the USIM. The RAN node may obtain the integrity protection key through calculation using the root key. The root key may be stored in the UDM network element, or may be stored in another core network element, which is not limited.

For example, the value corresponding to the first PDU is used to identify the first PDU or to indicate a time domain and/or frequency domain location where the first PDU is located. For instance, the value corresponding to the first PDU may be any one of the following: a sequence number (SN), a count value (COUNT), a system frame number (SFN) of the system frame in which the first PDU is located, a value obtained based on the SFN of the system frame in which the first PDU is located and a hyper system frame number (H-SFN), an index of a time domain resource in which the first PDU is located, or a value of a time-frequency resource indication field.

The SN and/or the count value corresponding to the first PDU may be used to identify the first PDU. In addition, the SN and/or the count value corresponding to the first PDU may be carried in a header of the first PDU or a subheader of the sub-PDU and output, so that the second communications apparatus determines the second verification code to perform integrity verification.

The SFN, the H-SFN, the index of the time domain resource, and the value of the time-frequency resource indication field in which the first PDU is located may be used to indicate a time domain and/or a frequency domain location at which the first PDU is located. These may be obtained from scheduling information (for example, downlink control information (downlink control information, DCI)) of a TB in which the first PDU is located. The value obtained based on the SFN and the H-SFN in which the first PDU is located may be a concatenation of the SFN and the H-SFN. The index of the time domain resource in which the first PDU is located may be an index of orthogonal frequency division multiplexing (orthogonal frequency division multiplexing, OFDM), an index of a slot, or the like, which is not limited. The value of the time-frequency resource indication field indicates a time-frequency resource used to carry the first PDU.

For example, the transmission direction of the first PDU may also be replaced with the transmission direction of the first data unit, and the two are consistent. The transmission direction includes uplink or downlink.

For example, the HARQ identifier corresponding to the first PDU may also be understood as an identifier of a HARQ process corresponding to the first PDU, or a number (HARQ process number) of a HARQ process corresponding to the first PDU.

For example, the LCID corresponding to the first data unit may be an identifier of a logical channel through which the data unit is transmitted between the RLC layer entity and the MAC layer entity. Alternatively, the LCID corresponding to the first data unit may be determined based on a type or a function of the data unit. For details, refer to the related description of the LCID in step S901, and details are not described herein again.

For example, the identifier of the radio bearer corresponding to the first data unit may be an identifier of a radio bearer that carries the first data unit.

For example, the type parameter of the first data unit may be a value, and different values indicate different types of the first data unit. For example, when the first protocol layer is a MAC layer, a data packet delivered by the RLC layer to the MAC layer includes data, a PDCP status report, or an RLC control PDU, and the data, the PDCP status report, and the RLC control PDU delivered by the RLC layer are on a same logical channel, that is, the data, the PDCP status report, and the RLC control PDU correspond to a same LCID. In this scenario, the type parameter needs to distinguish the three. In other words, in this example, the first data unit may be the data, the PDCP status report, or the RLC control PDU.

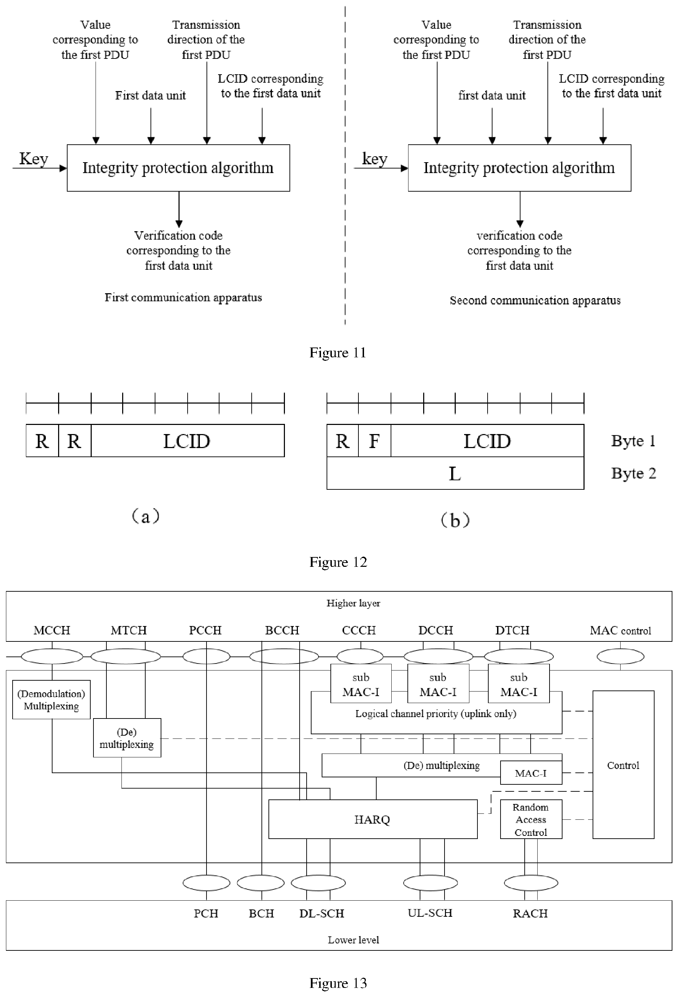

For example, the verification code corresponding to the first data unit is obtained based on a key, a value corresponding to the first PDU, the first data unit, a transmission direction of the first PDU, and an LCID corresponding to the first data unit. A schematic diagram of determining, by the first communications apparatus, the verification code corresponding to the first data may be shown in FIG. 11.

It may be understood that the first data unit is any one of the plurality of data units. That is, for an implementation of the verification code corresponding to each data unit in the plurality of data units, refer to the implementation of the verification code corresponding to the first data unit.

In a possible implementation, the first verification code is an exclusive OR of verification codes respectively corresponding to the plurality of data units. For example, based on the example shown in FIG. 10, the first verification code is an exclusive OR of sub MAC-I 1, sub MAC-I 2, and sub MAC-I 3.

In another possible implementation, the first verification code is a verification code obtained after integrity protection is performed on the verification codes respectively corresponding to the plurality of data units.

For example, the verification codes respectively corresponding to the plurality of data units may be used as input parameters, and the first verification code may be obtained through calculation by the integrity protection algorithm. In addition, the input parameter may further include at least one of an integrity protection key, a transmission direction of the first PDU, a HARQ identifier corresponding to the first PDU, or a value corresponding to the first PDU. Refer to the foregoing description, and details are not described herein again.

For another example, the first verification code is a CRC check value of a set of verification codes respectively corresponding to the plurality of data units. The set may be, for example, a bit stream obtained by concatenating (or serially connecting) the verification codes respectively corresponding to the plurality of data units in a specific order. The specific order may be an order of the plurality of data units from front to back or from back to front in the first PDU, or certainly may be another order, which is not limited.

For example, the length (number of bits included in the set) of the set is K, and the length of the CRC check value of the set is R. The first communications apparatus may add R zeros after the K bits of data in the set, to obtain K+R bits of data. Then, the CRC check value is determined based on the K+R bits of data and the CRC generator polynomial. A quantity P of binary code elements of the CRC generator polynomial is equal to R+1. The CRC generator polynomial may be pre-agreed by the first communications apparatus and the second communications apparatus.

The process in which the first communications apparatus determines the CRC check value based on the K+R-bit data and the CRC generator polynomial may include: performing a modulo-2 division operation, that is, dividing the K+R-bit data by the binary code element of the CRC generator polynomial to obtain a remainder. Then, it is determined whether an order of the remainder is less than R. An order of the remainder is equal to a length of a binary representation of the remainder minus 1. If the order of the remainder is less than R, the remainder is the CRC check code (if a length of a binary representation of the remainder is less than R, 0s are added to the front of the remainder to pad the remainder to R bits); or if the order of the remainder is greater than or equal to R, the remainder is divided by the binary code element of the CRC generator polynomial again until the order of the remainder is less than R.

Optionally, the data unit may be located in a sub-PDU (subPDU) included in the first PDU, and in a subheader of the sub-PDU, the first communications apparatus may indicate whether integrity protection is performed on the data unit in the sub-PDU, or indicate whether the verification object of the first verification code includes the data unit in the sub-PDU.

When the plurality of data units include the first data unit, the first PDU may include the first sub-PDU, and the first data unit may be located in the first sub-PDU. Further, the subheader of the first sub-PDU may include the first information, where the first information is used to indicate that integrity protection is performed on the first data unit, or the first information is used to indicate that a verification object of the first verification code includes the first data unit.

For example, the first information may be located in a reserved field in the subheader of the first sub-PDU, or a field may be newly added to the subheader of the first sub-PDU to carry the first information. The field that carries the first information may be referred to as a security indication field, or may have another name, which is not limited.

For example, the field that carries the first information may be 1 bit, where a value of the 1 bit being the first value indicates the first information, indicating that integrity protection is performed on the first data unit; and a value of the 1 bit being the second value indicates that integrity protection is not performed on the first data unit. For example, the first value may be "1", and correspondingly, the second value is "0"; or the first value is "0", and correspondingly, the second value is "1".

For example, when the first protocol layer is a MAC layer, the subheader structure of the sub-PDU in the first PDU may be shown in (a) or (b) in FIG. 12. Herein, R represents a reserved field, and the LCID field is used to carry an LCID corresponding to the data unit. F represents a size of a length field in the subheader, and L represents the length field, which is used to carry a length of the data unit. Based on the example shown in FIG. 12, the first information may be located in the reserved field.

Based on this design, the transmitting end may indicate which data units have integrity protection performed, so that the receiving end can clearly identify the data units for which integrity verification needs to be performed, thereby determining the second verification code based on the correct data units, and improving accuracy of integrity verification.

Optionally, in a possible implementation, the first verification code may be located in a second sub-PDU included in the first PDU. The second sub-PDU may be the last sub-PDU in the first PDU.

For example, the subheader of the second sub-PDU may include length information of the first verification code. Alternatively, the length of the first verification code may be agreed upon in a protocol, or pre-negotiated between the transmitting end and the receiving end. In this case, the subheader of the second sub-PDU may not include the length information of the first verification code.

As another possible implementation, the first verification code may be carried at the end of the first PDU, for example, at the front end of a padding (padding) part of the first PDU (as shown in FIG. 10), that is, the first verification code may not be carried in the sub-PDU. In this case, the length of the first verification code may be agreed upon by the protocol, or pre-negotiated between the transmitting end and the receiving end.

Based on the foregoing manner 1, the first communication apparatus first determines verification codes respectively corresponding to the plurality of data units, and then determines the first verification code according to the verification codes respectively corresponding to the plurality of data units. Therefore, after obtaining the data unit, the first communication apparatus may immediately perform integrity protection processing. There is no need to wait until the first protocol layer entity assembles the first PDU before performing integrity protection processing, thereby reducing a data processing delay and improving service performance.

For example, the first protocol layer is the MAC layer. Data in a logical channel is usually multiplexed at the MAC layer, that is, multiplexed into one TB and then delivered to a lower-layer protocol layer through a transport channel. As shown in FIG. 13, based on the foregoing manner 1, after obtaining the data unit from the logical channel, the first communication apparatus may immediately determine the verification code (denoted as sub MAC-I) corresponding to the data unit, thereby determining the first verification code (denoted as MAC-I), and subsequently encapsulating the first verification code during multiplexing.

The logical channels shown in FIG. 13 from left to right are: a multicast control channel (multicast control channel, MCCH), a multicast traffic channel (multicast traffic channel, MTCH), a paging control channel (paging control channel, PCCH), a broadcast control channel (broadcast control channel, BCCH), a common control channel (common control channel, CCCH), a dedicated control channel (dedicated control channel, DCCH), and a dedicated traffic channel (dedicated traffic channel, DTCH).

The transport channels shown in FIG. 13 from left to right are: a paging channel (paging channel, PCH), a broadcast channel (broadcast channel, BCH), a downlink shared channel (downlink shared channel, DL-SCH), an uplink shared channel (uplink shared channel, UL-SCH), and a random access channel (random access channel, RACH).

Manner 2: The first communications apparatus determines the first input parameter, and determines the first verification code based on the first input parameter. The first input parameter includes the first bitstream and at least one of the following: a key (or referred to as an integrity protection key), a value corresponding to the first PDU, a transmission direction of the first PDU, or a HARQ identifier corresponding to the first PDU.

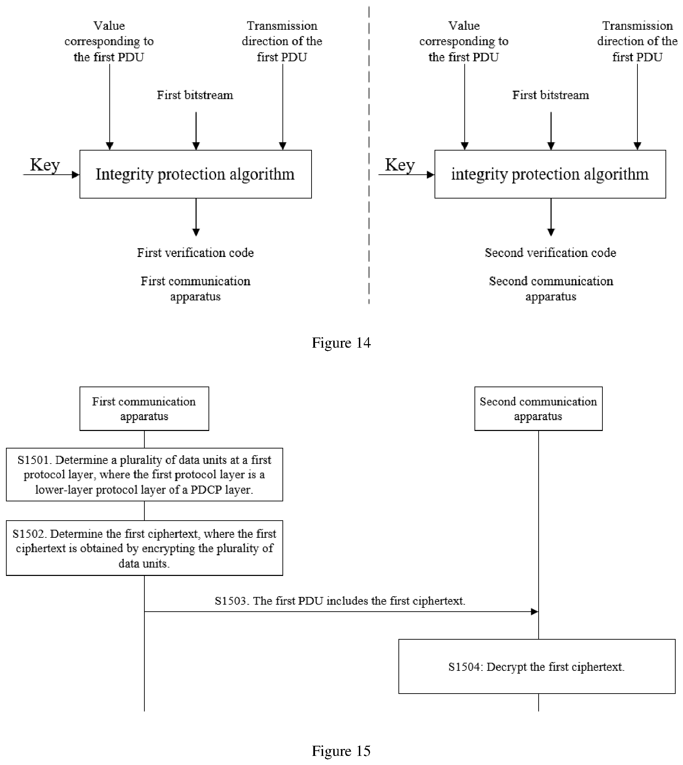

For example, the first verification code is obtained based on the key, the value corresponding to the first PDU, the first bitstream, and the transmission direction of the first PDU. A schematic diagram of determining the first verification code by the first communications apparatus may be shown in FIG. 14.

In a first possible implementation, the first bitstream is a set of the plurality of data units. For example, the first bitstream is a bitstream obtained by concatenating (or serially connecting) the plurality of data units in a specific order. The specific order may be an order of the plurality of data units from front to back or from back to front in the first PDU, or certainly may be another order, which is not limited.

For example, when the plurality of data units are some data units of the first PDU, based on the example shown in FIG. 10, the first bitstream may be represented as: MAC CE 1 || MAC CE 2 || MAC SDU N, where "||" indicates concatenation.

For example, when the plurality of data units are all data units of the first PDU, assuming that the first PDU includes the MAC CE 1, the MAC CE 2, the MAC SDU 1, the MAC SDU 2,..., and the MAC SDU N, the first bitstream may be represented as MAC CE 1 || MAC CE 2 || MAC SDU 1 || MAC SDU 2 ||... || MAC SDU N.

In a second possible implementation, the first bitstream is a set of sub PDUs (denoted as multiple sub PDUs) in which the plurality of data units are located. For example, the first bitstream is a bitstream obtained by concatenating (or serially connecting) the plurality of sub PDUs in a specific order, where the specific order may be an order of the plurality of sub PDUs from front to back or from back to front in the first PDU, or certainly may be another order, which is not limited.

For example, when the plurality of data units are some data units of the first PDU, that is, when the plurality of sub PDUs are some sub PDUs of the first PDU, based on the example shown in FIG. 10, the first bitstream may be represented as: subPDU including the MAC CE 1 || subPDU including the MAC CE 2 || subPDU including the MAC SDU N, where "||" indicates concatenation.

For example, when the plurality of data units are all data units of the first PDU, that is, when the plurality of sub PDUs are all sub PDUs of the first PDU, assuming that the first PDU includes the MAC CE 1, the MAC CE 2, the MAC SDU 1, the MAC SDU 2,..., and the MAC SDU N, the first bitstream may be represented as: subPDU including the MAC CE 1 || subPDU including the MAC CE 2 || subPDU including the MAC SDU 1 || subPDU including the MAC SDU 2 ||... || subPDU including the MAC SDU N.

It may be understood that, compared with the first possible implementation, the second possible implementation also performs integrity protection on the subheader of the sub PDU.

For example, the determining the first verification code based on the first input parameter may include: using the first input parameter as an input of an integrity protection algorithm, where an output of the integrity protection algorithm is the first verification code.

For the parameters, except the first bitstream, that are used to determine the first verification code, refer to the related descriptions in the foregoing manner 1. Details are not described herein again.

In a possible implementation, when the plurality of data units are all data units of the first PDU, the header of the first PDU may include second information, where the second information may be used to indicate that integrity protection is performed on the first PDU (or all sub PDUs of the first PDU) or all data units of the first PDU.

For example, the second information may be a one-bit indicator (indicator). When a value of the one bit is the first value, the second information indicates that integrity protection is performed on the first PDU; or when a value of the one bit is the second value, the second information indicates that integrity protection is performed on all data units of the first PDU. For example, the first value may be "1", and correspondingly, the second value is "0"; or the first value is "0", and correspondingly, the second value is "1".

In another possible implementation, when the plurality of data units are all data units of the first PDU, and the first PDU is located in the first TB or when the first PDU is the first TB, the first communications apparatus further determines scheduling information of the first TB, where the scheduling information may include third information, and the third information is used to indicate that integrity protection needs to be performed on the PDU or all data units in the PDU included in the first TB. The first communications apparatus may learn, based on the third information, that integrity protection needs to be performed on the first PDU (or all sub-PDUs of the first PDU) or all data units of the first PDU. At the receiving end, the second communications apparatus may also learn, based on the third information, that the first communications apparatus has performed integrity protection on the first PDU or all data units of the first PDU. For implementation of the third information, refer to the related descriptions of the second information, and details are not described herein again.

When the first communications apparatus is a terminal and the second communications apparatus is a RAN node, the determining, by the first communications apparatus, scheduling information of the first TB may include: the first communications apparatus receives the scheduling information of the first TB from the second communications apparatus. When the first communications apparatus is a RAN node and the second communications apparatus is a terminal, the first communications apparatus further sends the scheduling information of the first TB to the second communications apparatus. For example, the RAN node may send the scheduling information of the first TB to the terminal by carrying the scheduling information of the first TB in the DCI.

In another possible implementation, when the plurality of data units are some data units in the first PDU, the header of the first PDU may include fourth information. The fourth information is used to indicate that integrity protection has been performed on the plurality of data units or on the sub-PDUs in which the plurality of data units are located.

For example, the fourth information may include indication information and a bitmap. The indication information indicates the data unit or the sub-PDU in which the data unit is located. The bitmap may include M bits, where M is a total quantity of data units in the first PDU, and the M bits are in a one-to-one correspondence with the M data units or M sub-PDUs (that is, sub-PDUs in which the M data units are located) in the first PDU. When the value of the first bit is the preset value, it indicates that integrity protection has been performed on the data unit or sub-PDU corresponding to the first bit. Specifically, whether integrity protection has been performed on the data unit or sub-PDU corresponding to the first bit may be determined by the indication information. When the indication information indicates the data unit, it indicates that integrity protection has been performed on the data unit corresponding to the first bit; or when the indication information indicates the sub-PDU, it indicates that integrity protection has been performed on the sub-PDU corresponding to the first bit. The first bit is any one of the M bits.

For another example, the fourth information may include indication information and numbers of the plurality of data units or sub PDUs in the first PDU, indicating that integrity protection is performed on the data units or sub PDUs corresponding to these numbers. Specifically, whether integrity protection is performed on the data units or the sub PDUs may be determined by the indication information. For details, refer to the foregoing related descriptions, and details are not described herein again.

Based on the foregoing manner 2, an integrity protection algorithm calculation may be performed once in the process of determining the first verification code, thereby reducing calculation overheads. In addition, when the first bitstream is a set of sub PDUs in which the plurality of data units are located, integrity protection is also performed on subheaders corresponding to the plurality of data units, thereby further improving security performance.

For example, the second communications apparatus may determine the second verification code in the following two manners:
Manner A: The second communications apparatus determines verification codes respectively corresponding to the plurality of data units, and then determines the second verification code based on the verification codes respectively corresponding to the plurality of data units. It may be understood that the plurality of data units are a plurality of data units in the first PDU received by the second communications apparatus.

In a possible implementation, the second verification code is an exclusive OR of verification codes respectively corresponding to the plurality of data units. Alternatively, the second verification code is a verification code obtained after integrity protection is performed on verification codes respectively corresponding to the plurality of data units. For example, the verification codes respectively corresponding to the plurality of data units may be used as input parameters, and the second verification code is obtained by performing calculation by using an integrity protection algorithm; or the second verification code is a set of verification codes respectively corresponding to the plurality of data units. Refer to the related descriptions in the foregoing manner 1 for details, and details are not described herein again.

In a possible implementation, an example in which the plurality of data units include the first data unit is used. The verification code corresponding to the first data unit is obtained based on at least one of the following, or an input parameter for performing integrity protection on the first data unit includes at least one of the following: a key (or referred to as an integrity protection key), the first data unit, a value corresponding to the first PDU, a transmission direction of the first PDU, a HARQ identifier corresponding to the first PDU, an LCID corresponding to the first data unit, a radio bearer identifier corresponding to the first data unit, or a type parameter of the first data unit.

For example, the verification code corresponding to the first data unit is obtained based on a key, a value corresponding to the first PDU, the first data unit, a transmission direction of the first PDU, and an LCID corresponding to the first data unit. A schematic diagram of determining, by the second communications apparatus, the verification code corresponding to the first data may be shown in FIG. 11.

As a possible implementation, when the first communications apparatus indicates, in the subheader of the sub-PDU, whether integrity protection is performed on the data unit in the sub-PDU, the second communications apparatus may determine the plurality of data units based on the indication. That is, the plurality of data units are the data units in the first PDU on which integrity protection is performed.

In another possible implementation, the second communications apparatus may determine at least one LCID or at least one LCG identifier, and a data unit corresponding to the at least one LCID or LCG identifier is a data unit on which integrity protection needs to be performed. In this scenario, the second communications apparatus may determine the plurality of data units based on the at least one LCID or LCG identifier. For example, if an LCID of a data unit belongs to the at least one LCID, and/or an LCG identifier of the data unit belongs to the at least one LCG identifier, the data unit indicates that the data unit is a data unit on which integrity protection is performed.

For a specific implementation of method A, refer to the description in method 1, and details are not described herein again. It may be understood that when the first communications apparatus determines the first verification code in the foregoing manner 1, the second communications apparatus determines the second verification code in method A.

For example, when the second verification code is a set of verification codes respectively corresponding to the plurality of data units, in step S905, the determining, by the second communications apparatus based on the first verification code and the second verification code, whether the plurality of data units are changed may include: the second communications apparatus concatenates the first verification code to the second verification code to obtain a bit stream B, and then divides the bit stream B by the binary code of the CRC generator polynomial using a modulo-2 division method. If there is no remainder after the division operation, it indicates that no error occurs in the transmission process, and the plurality of data units are not changed; otherwise, it indicates that an error occurs in the transmission process, and the plurality of data units may be changed.

When the second verification code is the exclusive OR of the verification codes respectively corresponding to the plurality of data units, or when the verification codes respectively corresponding to the plurality of data units are used as input parameters, and the second verification code is obtained through an operation of an integrity protection algorithm, in step S905, the determining, by the second communications apparatus based on the first verification code and the second verification code, whether the plurality of data units are changed may include: if the first verification code is the same as the second verification code, it indicates that the plurality of data units are not changed; or if the first verification code is different from the second verification code, it indicates that the plurality of data units have been changed.

Manner B: The second communications apparatus determines the first input parameter, and determines the second verification code based on the first input parameter. The first input parameter includes the first bitstream and at least one of the following: a key (or referred to as an integrity protection key), a value corresponding to the first PDU, a transmission direction of the first PDU, or a HARQ identifier corresponding to the first PDU.

For example, the second verification code is obtained based on the key, the value corresponding to the first PDU, the first bitstream, and the transmission direction of the first PDU. A schematic diagram of determining the second verification code by the second communications apparatus may be shown in FIG. 14.

For specific implementation of manner B, refer to the description in manner 2 mentioned above, and details will not be repeated herein. It may be understood that when the first communications apparatus determines the first verification code in the foregoing manner 2, the second communications apparatus determines the second verification code in manner B.

In a possible implementation, when the header of the first PDU includes the second information, the second communications apparatus may determine, based on the second information, that integrity protection has been performed on an entire data unit of the first PDU or on an entire data unit of the first PDU.

In another possible implementation, when the scheduling information of the first TB includes the third information, the second communications apparatus may determine, based on the third information, that integrity protection has been performed on the first PDU or all data units of the first PDU.

In still another possible implementation, when the header of the first PDU includes the fourth information, the second communications apparatus may determine the plurality of data units based on the fourth information.

For example, when the second communications apparatus determines the second verification code in the manner B, step S905 may include: the second communications apparatus determining, based on the first verification code and the second verification code, whether the plurality of data units are changed, where: when the first verification code is the same as the second verification code, it indicates that the plurality of data units are not changed; or when the first verification code is different from the second verification code, it indicates that the plurality of data units have been changed.

The foregoing solution performs integrity protection on the data unit at the first protocol layer. In addition, this application further provides a data processing method, used to encrypt a data unit at a first protocol layer. As shown in FIG. 15, the data processing method includes the following steps:
S1501: The first communication apparatus determines a plurality of data units at the first protocol layer.

For descriptions of the first communication apparatus and the first protocol layer, refer to the related descriptions of the first communication apparatus and the first protocol layer in step S901 above, which will not be repeated herein.

In a possible implementation, the plurality of data units may be understood as data units that need to be encrypted. For example, there may be various encryption algorithms for encrypting and encrypting data, such as the Advanced Encryption Standard (AES) algorithm, the Data Encryption Standard (DES) algorithm, the Triple DES (3DES) algorithm, and the like. The specific encryption algorithm used is not specifically limited in this embodiment of this application.

In a possible implementation, when a data unit at the first protocol layer is a PDU of an upper-layer protocol layer (referred to as a second protocol layer) of the first protocol layer-for example, when the data unit is a MAC SDU-the entity at the second protocol layer may send indication information to the entity at the first protocol layer when delivering the data unit to the entity at the first protocol layer, to indicate that the data unit needs to be encrypted.

In another possible implementation, when a data unit at the first protocol layer is a data unit generated by an entity at the first protocol layer, for example, the data unit is a MAC CE, the first protocol layer may determine, based on an implementation, whether the data unit needs to be encrypted. For related descriptions of whether integrity protection needs to be performed on the data unit, refer to the related descriptions in step S901, and details are not described herein again.

In still another possible implementation, the protocol may predefine or the RAN node may preconfigure at least one LCID or at least one LCG identifier, and a data unit corresponding to the at least one LCID or LCG identifier is the data unit that needs to be encrypted. In this scenario, the first communication apparatus may determine the plurality of data units based on the at least one LCID or LCG identifier. For related descriptions of whether integrity protection needs to be performed on the data unit and related implementations of the LCID and LCG identifier, refer to the related descriptions in step S901, and details are not described herein again.

S1502: The first communications apparatus determines the first ciphertext.

The first ciphertext is obtained by encrypting the plurality of data units. A specific implementation will be described in detail in subsequent embodiments, and details are not described herein.

S1503: The first communications apparatus outputs the first PDU. Correspondingly, the second communications apparatus receives the first PDU, where the first PDU includes the first ciphertext.

For implementations of the second communications apparatus, the first PDU, and the relationship between the plurality of data units and the first PDU, refer to the related descriptions in step S903. Details are not described herein again.

S1504: The second communications apparatus decrypts the first ciphertext.

In a possible implementation, the second communications apparatus obtains the plaintext after successfully decrypting the first ciphertext, or obtains the plaintext of the plurality of data units included in the first PDU.

In a possible implementation, the second communications apparatus decrypts the first ciphertext by using the parameter used by the first communications apparatus to determine the first ciphertext, which will be described in detail in subsequent embodiments, and details are not described herein again.

Based on the foregoing solution, the transmitting end can encrypt the data unit at the first protocol layer. Because the first protocol layer is usually located at a lower layer of the PDCP layer, or is usually a lower-layer protocol layer, the solution of this application encrypts the data unit at the lower-layer protocol layer. In addition, because a PDU at a higher layer protocol is usually used as a data unit at a lower layer protocol, it may be considered that the solution of this application encrypts the PDU (including a user plane PDU and a control plane PDU) at the higher layer protocol on the first protocol layer, thereby preventing information carried in the data unit from being leaked, preventing an unauthorized device from changing the data unit, and improving security performance of data transmission and user experience.

The foregoing describes an overall procedure of the data processing method provided in this application. The following describes specific implementations in which the first communications apparatus determines the first ciphertext in step 1502 and the second communications apparatus decrypts the first ciphertext in step S1504. For example, the first communications apparatus may determine the first ciphertext in the following two manners:
Manner 1: The first communications apparatus determines ciphertexts respectively corresponding to the plurality of data units, and then determines the first ciphertext based on the ciphertexts respectively corresponding to the plurality of data units.

In a possible implementation, an example in which the plurality of data units include the first data unit is used. The ciphertext corresponding to the first data unit is obtained based on the first data unit and at least one of the following, or an input parameter for encrypting the first data unit includes the first data unit and at least one of the following: a key (or referred to as an encryption key), a value corresponding to the first PDU, a transmission direction of the first PDU, a HARQ identifier corresponding to the first PDU, an LCID corresponding to the first data unit, a radio bearer identifier corresponding to the first data unit, a type parameter of the first data unit, or a key stream length.

The key stream length refers to a length of a key stream (the first key stream or the second key stream described below) used for encryption/decryption. For descriptions of the other parameters, refer to the related descriptions in manner 1 of the integrity protection solution mentioned above, and details are not described herein again.

For example, encrypting the first data unit may include: determining the first key stream based on the third input parameter, and performing an exclusive OR operation on the first key stream and the first data unit to obtain ciphertext corresponding to the first data unit. The third input parameter may include at least one of the following: a key (or referred to as an encryption key), a value corresponding to the first PDU, a transmission direction of the first PDU, a HARQ identifier corresponding to the first PDU, an LCID corresponding to the first data unit, a radio bearer identifier corresponding to the first data unit, a type parameter of the first data unit, or a key stream length (for example, a length of the first key stream).

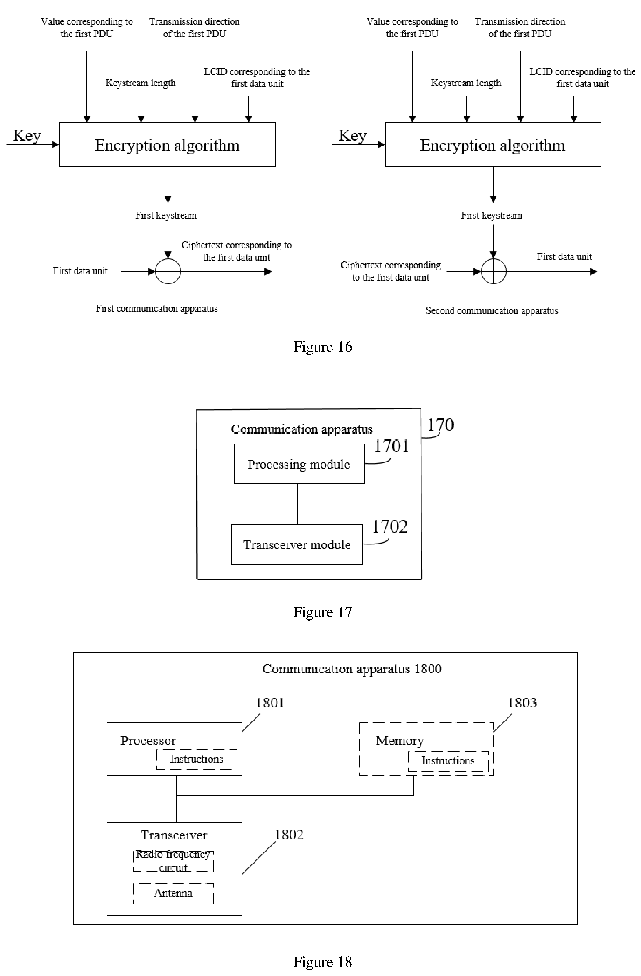

For example, the third input parameter includes an encryption key, a value corresponding to the first PDU, a transmission direction of the first PDU, an LCID corresponding to the first data unit, and a key stream length. A schematic diagram of a scenario in which the first communications apparatus determines the ciphertext corresponding to the first data unit may be shown in FIG. 16.

It may be understood that the first data unit is any one of the plurality of data units. That is, for an implementation of the ciphertext corresponding to each of the plurality of data units, refer to the implementation of the ciphertext corresponding to the first data unit.

In a possible implementation, the first ciphertext is a set of ciphertexts corresponding to the plurality of data units respectively. That is, the first ciphertext includes ciphertexts corresponding to the plurality of data units respectively.

Optionally, the ciphertext corresponding to the data unit may be located in a sub-PDU included in the first PDU, and in a subheader of the sub-PDU, the first communications apparatus may indicate whether the data unit corresponding to the sub-PDU is encrypted.

When the plurality of data units include the first data unit, the first PDU may include the first sub-PDU, and the ciphertext corresponding to the first data unit may be located in the first sub-PDU. Further, the subheader of the first sub-PDU may include the first information, where the first information is used to indicate that the first data unit is encrypted. For a specific implementation of the first information, refer to the related descriptions of the first information in the integrity protection solution manner 1 described above. Details are not described herein again.

Manner 2: The first communication apparatus determines a second input parameter, and determines the first ciphertext based on the second input parameter. The second input parameter includes the first bitstream and at least one of the following: a key (or referred to as an encryption key), a value corresponding to the first PDU, a transmission direction of the first PDU, a HARQ identifier corresponding to the first PDU, or a key stream length.

In a possible implementation, the first bitstream is a set of the plurality of data units, or the first bitstream is a set of sub-PDUs in which the plurality of data units are located. For details, refer to the related descriptions in manner 2 of the integrity protection solution mentioned above. Details are not described herein again.

In a possible implementation, the determining the first ciphertext based on the second input parameter may include: determining a second keystream based on the fourth input parameter, and performing an exclusive OR operation on the second keystream and the first bitstream to obtain the first ciphertext.

For example, the fourth input parameter includes a parameter other than the first bitstream in the second input parameter. That is, the fourth input parameter may include at least one of the following: a key (or referred to as an encryption key), a value corresponding to the first PDU, a transmission direction of the first PDU, a HARQ identifier corresponding to the first PDU, or a key stream length (for example, a length of the second keystream).

In a possible implementation, when the plurality of data units are all data units of the first PDU, the header of the first PDU may include second information, where the second information may be used to indicate that the first PDU (or all sub-PDUs of the first PDU) or all data units of the first PDU are encrypted.

In another possible implementation, when the plurality of data units are all data units of the first PDU, and the first PDU is located in the first TB or the first PDU is the first TB, the first communications apparatus further determines scheduling information of the first TB, where the scheduling information may include third information, and the third information is used to indicate that a PDU included in the first TB or all data units in the PDU need to be encrypted. The first communications apparatus may learn, based on the third information, that the first PDU (or all sub-PDUs of the first PDU) or all data units of the first PDU need to be encrypted. At the receiving end, the second communications apparatus may also learn, based on the third information, that the first communications apparatus has encrypted the first PDU or all data units of the first PDU.

In another possible implementation, when the plurality of data units are some data units in the first PDU, the header of the first PDU may include fourth information. The fourth information is used to indicate that the plurality of data units or the sub-PDUs in which the plurality of data units are located are encrypted.

For implementations of the second information, the third information, and the fourth information, refer to the related descriptions in Manner 2 of the integrity protection solution, and details are not described herein again.

For example, the second communications apparatus may decrypt the first ciphertext in the following two manners:
Manner A: When the first ciphertext is a set of ciphertexts each corresponding to a plurality of data units, the second communications apparatus decrypts the ciphertexts each corresponding to the plurality of data units.

In a possible implementation, the second communications apparatus may determine the first keystream based on the third input parameter, and perform an exclusive OR operation on the keystream and the ciphertexts each corresponding to the plurality of data units, to obtain the plurality of data units. For the third input parameter, refer to the related descriptions in Manner 1, and details are not described herein again.

For example, where a plurality of data units include the first data unit, and the third input parameter includes an encryption key, a value corresponding to the first PDU, a transmission direction of the first PDU, an LCID corresponding to the first data unit, and a keystream length, a schematic diagram of decrypting the second communication apparatus the ciphertext corresponding to the first data unit may be shown in FIG. 16.

In a possible implementation, where the first communication apparatus indicates, in the subheader of the sub-PDU, whether the data unit in the sub-PDU is encrypted, the second communication apparatus may determine the plurality of data units based on the indication. That is, the plurality of data units are the data units in the first PDU that have been encrypted.

In another possible implementation, the second communication apparatus may determine at least one LCID or at least one LCG identifier, and a data unit corresponding to the at least one LCID or LCG identifier is a data unit that needs to be encrypted. In this scenario, the second communication apparatus may determine the plurality of data units based on the at least one LCID or LCG identifier. For example, if an LCID of a data unit belongs to the at least one LCID, and/or an LCG identifier of the data unit belongs to the at least one LCG identifier, the data unit is an encrypted data unit.

For specific implementation of the method A, refer to the description in the foregoing method 1. Details are not described herein again. It may be understood that when the first communications apparatus determines the first ciphertext in the foregoing manner 1, the second communications apparatus decrypts the first ciphertext in the method A.

Manner B: The second communications apparatus decrypts the first ciphertext by using the second keystream. The second keystream is determined based on a fourth input parameter. For the fourth input parameter, refer to the related description in the foregoing manner 2. Details are not described herein again.

In a possible implementation, the second communications apparatus determines the second keystream based on the fourth input parameter, performs an exclusive OR operation on the second keystream and the first ciphertext to obtain the first bit stream, and then obtains the plurality of data units.

In a possible implementation, when the header of the first PDU includes the second information, the second communications apparatus may determine, based on the second information, that encryption is performed on the first PDU or all data units of the first PDU.

In another possible implementation, when the scheduling information of the first TB includes the third information, the second communications apparatus may determine, based on the third information, that encryption is performed on the first PDU or all data units of the first PDU.

As another possible implementation, when the header of the first PDU includes the fourth information, the second communications apparatus may determine the plurality of data units based on the fourth information.

It should be noted that the data processing method related to integrity protection/verification in FIG. 9 to FIG. 14 and the data processing method related to encryption/decryption in FIG. 15 to FIG. 16 may be performed independently without depending on each other, or may be combined with each other. For example, the transmitting end may first encrypt the data by using the method related to FIG. 15 to FIG. 16, and then perform integrity protection on the encrypted data by using the method related to FIG. 9 to FIG. 14; or may encrypt the data by using the method related to FIG. 15 to FIG. 16, and perform integrity protection on the plaintext data by using the method related to FIG. 9 to FIG. 14; or may encrypt some data by using the method related to FIG. 15 to FIG. 16, and perform integrity protection on another part of the plaintext data by using the method related to FIG. 9 to FIG. 14. A combination manner of the foregoing methods is not specifically limited in this application.

In addition, when the data processing method for performing integrity protection/verification and the data processing method for performing encryption/decryption are performed in combination, the transmitting end may carry the indication information in a subheader of the sub PDU or in a header of the PDU, to indicate an encrypted data unit and/or an integrity protected data unit. For details, refer to the related implementations of the first information to the fourth information, and details are not described herein again.

It should be noted that, in this application, "sending information to (a communication apparatus)" may be understood as that a destination end of the information is the communication apparatus, and may include directly or indirectly sending the information to the communication apparatus. "Receiving information from (a communication apparatus)" may be understood as that a source end of the information is the communication apparatus, and may include directly or indirectly receiving the information from the communication apparatus. The information may be processed as necessary between the source end and the destination end at which the information is sent, for example, format change, but the destination end may understand the information as valid information from the source end. Similar expressions in this application may be understood in a similar manner, and details are not described herein again.

It may be understood that, in the foregoing embodiments, the methods and/or steps implemented by the first communications apparatus may also be implemented by a component (for example, a processor, a chip, a chip system, a circuit, a logic module, or software) that can be used in the first communications apparatus; and the methods and/or steps implemented by the second communications apparatus may also be implemented by a component (for example, a processor, a chip, a chip system, a circuit, a logic module, or software) that can be used in the second communications apparatus. The chip system may include a chip, or the chip system may include a chip and another discrete component.

For example, when the method and/or step implemented by the first communications apparatus/the second communications apparatus is implemented by a component that can be used in the first communications apparatus/the second communications apparatus, the sending action/function may be understood as outputting information, and the receiving action/function may be understood as inputting information.

It may be understood that, to implement the foregoing functions, the communication apparatus includes a corresponding hardware structure and/or software module for performing each function. A person skilled in the art should easily be aware that, with reference to units and algorithm steps in the examples described with reference to embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the communication apparatus may be divided into function modules based on the foregoing method embodiments. For example, each function module may be obtained through division based on each corresponding function, or two or more functions may be integrated into one processing module. The integrated module may be implemented in a form of hardware, or may be implemented in a form of a software function module. It should be noted that the module division in the embodiments of this application is an example, and is merely logical function division, and may be other division in actual implementation.

FIG. 17 is a schematic structural diagram of a communication apparatus 170. The communication apparatus 170 includes a processing module 1701 and a transceiver module 1702. The communication apparatus 170 may be configured to implement the functions of the first communication apparatus or the second communication apparatus.

In some embodiments, the communication apparatus 170 may further include a storage module (not shown in FIG. 17), configured to store program instructions and data.

In some embodiments, the transceiver module 1702 may also be referred to as a transceiver unit configured to implement a sending and/or receiving function. The transceiver module 1702 may be formed by a transceiver circuit, a transceiver machine, a transceiver, or a communication interface.

In some embodiments, the transceiver module 1702 may include a receiving module and a sending module, which are respectively configured to perform receiving and sending steps performed by the first communications apparatus or the second communications apparatus in the foregoing method embodiments, and/or configured to support other processes of the technology described in this specification; and the processing module 1701 may be configured to perform processing (for example, determining) steps performed by the first communications apparatus or the second communications apparatus in the foregoing method embodiments, and/or configured to support other processes of the technology described in this specification.

When the communications apparatus 170 is configured to implement a function of the first communications apparatus, in a possible implementation:
The processing module 1701 is configured to determine a plurality of data units at a first protocol layer, where the first protocol layer is a lower-layer protocol layer of a packet data convergence protocol PDCP layer; the processing module 1701 is further configured to determine a first verification code used to verify integrity of the plurality of data units; and the transceiver module 1702 is configured to output a first protocol data unit PDU that includes the plurality of data units and the first verification code.

Optionally, that the processing module 1701 is configured to determine the first verification code includes: the processing module 1701 is configured to determine verification codes respectively corresponding to the plurality of data units; and the processing module 1701 is further configured to determine the first verification code based on the verification codes respectively corresponding to the plurality of data units.

Optionally, that the processing module 1701 is configured to determine a plurality of data units at the first protocol layer includes: the processing module 1701 is configured to determine the plurality of data units based on at least one logical channel identifier LCID or at least one logical channel group identifier LCG identifier, where a data unit corresponding to the at least one LCID or LCG identifier is a data unit for which integrity protection needs to be performed. The at least one LCID includes an LCID of each of the plurality of data units, or the at least one LCG identifier includes an LCG identifier of each of the plurality of data units.

Optionally, the first PDU is located in the first transport block TB, and the plurality of data units are all data units in the first PDU. The processing module 1701 is further configured to determine scheduling information for the first TB, where the scheduling information includes third information, and the third information is used to indicate that integrity protection needs to be performed on all the PDUs or all the data units in the PDU included in the first TB.

When the communication apparatus 170 is configured to implement a function of the first communication apparatus, in another possible implementation:
The processing module 1701 is configured to determine a plurality of data units at a first protocol layer, where the first protocol layer is a lower-layer protocol layer of a packet data convergence protocol PDCP layer; the processing module 1701 is further configured to determine a first ciphertext, where the first ciphertext is obtained by encrypting the plurality of data units; and the transceiver module 1702 is configured to output a first protocol data unit PDU that includes the first ciphertext.

Optionally, the determining, by the processing module 1701, a first ciphertext includes: the processing module 1701 is configured to determine ciphertexts respectively corresponding to the plurality of data units; and the processing module 1701 is further configured to determine the first verification code based on the ciphertexts respectively corresponding to the plurality of data units.

Optionally, the determining, by the processing module 1701, a plurality of data units at the first protocol layer includes: the processing module 1701 is configured to determine the plurality of data units based on an identifier of at least one logical channel LCID or an identifier of at least one logical channel group LCG, where a data unit corresponding to the at least one LCID or LCG identifier is a data unit that needs to be encrypted. The at least one LCID includes an LCID of each of the plurality of data units, or the at least one LCG identifier includes an LCG identifier of each of the plurality of data units.

Optionally, the first PDU is located in the first transport block TB; and the plurality of data units are all data units in the first PDU. The processing module 1701 is further configured to determine scheduling information of the first TB, where the scheduling information includes third information, and the third information is used to indicate that all data units in the PDU or the PDU included in the first TB need to be encrypted.

When the communications apparatus 170 is configured to implement a function of the second communications apparatus, in a possible implementation:
The transceiver module 1702 is configured to receive a first protocol data unit PDU, where the first PDU includes a plurality of data units at a first protocol layer and a first verification code, the first protocol layer is a lower-layer protocol layer of a Packet Data Convergence Protocol PDCP layer, and the first verification code is used to verify integrity of the plurality of data units; the processing module 1701 is configured to determine a second verification code, where the second verification code is used to verify integrity of the plurality of data units; and the processing module 1701 is further configured to determine, based on the first verification code and the second verification code, whether the plurality of data units are changed.

Optionally, that the processing module 1701 is configured to determine the second verification code includes: the processing module 1701 is configured to determine verification codes respectively corresponding to the plurality of data units; and the processing module 1701 is further configured to determine the second verification code based on the verification codes respectively corresponding to the plurality of data units.

Optionally, the processing module 1701 is further configured to determine at least one logical channel identifier LCID or at least one logical channel group identifier LCG, where a data unit corresponding to the at least one LCID or LCG identifier is a data unit for which integrity protection needs to be performed. The at least one LCID includes an LCID of each of the plurality of data units, or the at least one LCG identifier includes an LCG identifier of each of the plurality of data units.

Optionally, the first PDU is located in the first transport block TB, and the plurality of data units are all data units in the first PDU. The processing module 1701 is further configured to determine scheduling information of the first TB, where the scheduling information includes third information, and the third information is used to indicate that integrity protection needs to be performed on a PDU or all data units in the PDU included in the first TB.

When the communication apparatus 170 is configured to implement functions of the second communication apparatus, in another possible implementation:
The transceiver module 1702 is configured to receive a first protocol data unit PDU, where the first PDU includes a first ciphertext, the first ciphertext is obtained by encrypting a plurality of data units at a first protocol layer, and the first protocol layer is a lower-layer protocol layer of a packet data convergence protocol PDCP layer. The processing module 1701 is configured to decrypt the first ciphertext.

Optionally, the plurality of data units include a first data unit, and the first ciphertext includes a ciphertext corresponding to the first data unit. The processing module 1701 is configured to decrypt the first ciphertext, where the processing module 1701 is configured to: decrypt the first ciphertext, where the processing module 1701 is configured to: determine the first key stream based on the third input parameter; and the processing module 1701 is further configured to: perform an exclusive OR operation on the first key stream and the ciphertext corresponding to the first data unit to obtain the first data unit. The third input parameter includes at least one of the following: a key, a value corresponding to the first PDU, a transmission direction of the first PDU, a hybrid automatic repeat request HARQ identifier corresponding to the first PDU, an LCID corresponding to the first data unit, a radio bearer identifier corresponding to the first data unit, a type parameter of the first data unit, or a key stream length, where the value corresponding to the first PDU is used to identify the first PDU, or is used to indicate a time domain and/or a frequency domain location at which the first PDU is located.

Optionally, the processing module 1701 is configured to determine at least one logical channel identifier LCID or at least one logical channel group LCG identifier, where a data unit corresponding to the at least one LCID or LCG identifier is a data unit that needs to be encrypted. The at least one LCID includes an LCID of each of the plurality of data units, or the at least one LCG identifier includes an LCG identifier of each of the plurality of data units.

Optionally, the processing module 1701 is configured to decrypt the first ciphertext, where the processing module 1701 is configured to perform the following operations: determining a second keystream based on a fourth input parameter; and the processing module 1701 is further configured to perform an exclusive OR operation on the second keystream and the first ciphertext to obtain the first bitstream. The fourth input parameter includes at least one of the following: a key, a value corresponding to the first PDU, a transmission direction of the first PDU, a HARQ identifier corresponding to the first PDU, or a keystream length, where the value corresponding to the first PDU is used to identify the first PDU or used to indicate a time domain and/or frequency domain location where the first PDU is located. The first bitstream is a set of a plurality of data units, or the first bitstream is a set of sub-PDUs in which the plurality of data units are located.

Optionally, the first PDU is located in the first transport block TB; and the plurality of data units are all data units in the first PDU. The processing module 1701 is further configured to determine scheduling information of the first TB, where the scheduling information includes third information, and the third information is used to indicate that a PDU included in the first TB or all data units in the PDU need to be encrypted.

All related content of each step in the foregoing method embodiments may be referenced in the function descriptions of the corresponding function modules, that is, all the features in the foregoing method embodiments are applicable to the communication apparatus, and details are not described herein again.

In this application, the communication apparatus 170 may be presented in a form of dividing the communication apparatus 170 into function modules in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, when the communication apparatus 170 in FIG. 17 is a chip or a chip system, the functions/implementation processes of the transceiver module 1702 may be implemented through an input/output interface (or a communication interface) of the chip or the chip system, and the functions/implementation processes of the processing module 1701 may be implemented through a processor (or a processing circuit) of the chip or the chip system.

Since the communication apparatus 170 provided in this embodiment can perform the foregoing method, therefore, for technical effects that can be achieved by the communication apparatus 170, refer to the foregoing method embodiments, and details are not described herein again.

As a possible product form, the first communication apparatus or the second communication apparatus according to the embodiments of this application may alternatively be implemented by using the following: one or more field programmable gate arrays (field programmable gate array, FPGA), programmable logic devices (programmable logic device, PLD), a controller, a state machine, gate logic, discrete hardware components, any other suitable circuit, or any combination of circuits that can perform the various functions described throughout this application.

As another possible product form, the first communication apparatus or the second communication apparatus described in the embodiments of this application may be implemented by a general bus architecture. For ease of illustration, refer to FIG. 18, which is a schematic structural diagram of a communication apparatus 1800 according to an embodiment of this application. The communication apparatus 1800 includes a processor 1801 and a transceiver 1802. The communication apparatus 1800 may be the first communication apparatus, or a chip or a chip system thereof; or, the communication apparatus 1800 may be the second communication apparatus, or a chip or a module thereof. FIG. 18 shows only main components of the communication apparatus 1800. In addition to the processor 1801 and the transceiver 1802, the communication apparatus may further include a memory 1803 and an input/output apparatus (not shown in the figure).

Optionally, the processor 1801 is mainly configured to process communication protocols and communication data, control the entire communication apparatus, execute software programs, and process data of the software programs, thereby implementing the methods provided in the foregoing method embodiments. The memory 1803 is mainly configured to store software programs and data. The transceiver 1802 may include a radio frequency circuit and an antenna. The radio frequency circuit is mainly configured to perform conversion between a baseband signal and a radio frequency signal, and process the radio frequency signal. The antenna is mainly configured to receive and transmit radio frequency signals in an electromagnetic wave form. An input/output apparatus, such as a touchscreen, a display, a keyboard, or the like, is mainly configured to receive data input by a user and output data to the user.

Optionally, the processor 1801, the transceiver 1802, and the memory 1803 may be connected through a communication bus.

When the communication device is powered on, the processor 1801 may read the software program from the memory 1803, interpret and execute the instructions of the software program, and process the data of the software program. When data needs to be sent wirelessly, the processor 1801 performs baseband processing on the data to be sent, and then outputs a baseband signal to the radio frequency circuit. The radio frequency circuit performs radio frequency processing on the baseband signal and then sends the radio frequency signal to the outside in the form of electromagnetic waves through the antenna. When data is received by the communication device, the radio frequency circuit receives the radio frequency signal through the antenna, converts the radio frequency signal into a baseband signal, and outputs the baseband signal to the processor 1801. The processor 1801 then converts the baseband signal into data and processes the data.

In another implementation, the radio frequency circuit and antenna may be disposed independently of the processor performing baseband processing. For example, in a distributed scenario, the radio frequency circuit and antenna may be arranged in a remote manner, independent of the communication device.

In some embodiments, in terms of hardware implementation, a person skilled in the art may figure out that the communication apparatus 170 may be implemented in a form of the communication apparatus 1800 shown in FIG. 18.

In an example, the function/implementation process of the processing module 1701 in FIG. 17 may be implemented by the processor 1801 in the communication apparatus 1800 shown in FIG. 18 by invoking the computer-executable instructions stored in the memory 1803. The function/implementation process of the transceiver module 1702 in FIG. 17 may be implemented by the transceiver 1802 in the communication apparatus 1800 shown in FIG. 18.

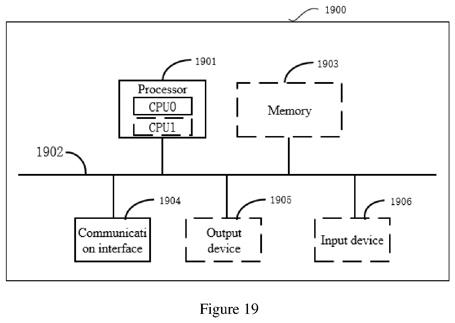

As yet another possible product form, the first communication apparatus or the second communication apparatus in this application may use the composition structure shown in FIG. 19 or include the components shown in FIG. 19. FIG. 19 is a schematic composition diagram of a communication apparatus 1900 according to this application. The communication apparatus 1900 may be the first communication apparatus or a chip or a system on chip in the first communication apparatus; or may be the second communication apparatus or a module, a chip, or a system on chip in the second communication apparatus.

As shown in Figure 19, the communication apparatus 1900 includes at least one processor 1901 and at least one communication interface (in Figure 19, an example is provided where the communication apparatus 1900 includes one communication interface 1904 and one processor 1901 for illustration). Optionally, the communication apparatus 1900 may further include a communication bus 1902 and a memory 1903.

The processor 1901 may be a general-purpose central processing unit (CPU), a general-purpose processor, a network processor (NP), a digital signal processor (DSP), a microprocessor, a microcontroller, a PLD, or any combination thereof. The processor 1901 may also be another apparatus with processing functions, such as a circuit, an apparatus, or a software module, without any limitation.

The communication bus 1902 is configured to connect different components in the communication apparatus 1900, so that the different components can communicate with each other. The communication bus 1902 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to indicate the bus in FIG. 19, but this does not mean that there is only one bus or only one type of bus.

The communication interface 1904 is configured to communicate with another device or a communication network. For example, the communication interface 1904 may be a module, a circuit, a transceiver, or any apparatus that can implement communication. Optionally, the communication interface 1904 may alternatively be an input/output interface located in the processor 1901, configured to implement signal input and signal output of the processor.

The memory 1903 may be an apparatus having a storage function, and is configured to store instructions and/or data. The instruction may be a computer program.

For example, the memory 1903 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, or the like), a magnetic disk storage medium, or another magnetic storage device. This is not limited.

It should be noted that the memory 1903 may exist independently of the processor 1901, or may be integrated with the processor 1901. The memory 1903 may be located inside the communications apparatus 1900, or may be located outside the communications apparatus 1900, which is not limited. The processor 1901 may be configured to execute the instructions stored in the memory 1903, to implement the methods provided in the following embodiments of this application.

In an optional implementation, the communications apparatus 1900 may further include an output device 1905 and an input device 1906. The output device 1905 communicates with the processor 1901, and may display information in a plurality of manners. For example, the output device 1905 may be a liquid crystal display (liquid crystal display, LCD), a light emitting diode (light emitting diode, LED) display device, a cathode ray tube (cathode ray tube, CRT) display device, a projector (projector), or the like. The input device 1906 communicates with the processor 1901, and may receive user input in a plurality of manners. For example, the input device 1906 may be a mouse, a keyboard, a touchscreen device, a sensing device, or the like.

In some embodiments, in terms of hardware implementation, a person skilled in the art may figure out that the communication apparatus 170 shown in FIG. 17 may be implemented in a form of the communication apparatus 1900 shown in FIG. 19.

In an example, the function/implementation process of the processing module 1701 in FIG. 17 may be implemented by the processor 1901 in the communication apparatus 1900 shown in FIG. 19 by invoking the computer-executable instructions stored in the memory 1903, as shown in FIG. 19. The function/implementation process of the transceiver module 1702 in FIG. 17 may be implemented by the communication interface 1904 in the communication apparatus 1900 shown in FIG. 19.

It should be noted that the structure shown in FIG. 19 does not constitute a specific limitation on the first communication apparatus or the second communication apparatus. For example, in some other embodiments of this application, the first communication apparatus or the second communication apparatus may include more or fewer components than those shown in the figure, or some components may be combined, or some components may be split, or there may be different component arrangements. The components shown in the figure may be implemented by hardware, software, or a combination of software and hardware.

In some embodiments, an embodiment of this application further provides a communications apparatus, where the communications apparatus includes a processor, configured to implement the method in any one of the foregoing method embodiments.

In a possible implementation, the communication apparatus further includes a memory. The memory is configured to store necessary computer programs and data. The computer program may include an instruction, and the processor may invoke the instruction in the computer program stored in the memory to instruct the communication apparatus to perform the method in any one of the foregoing method embodiments. Certainly, the memory may not be disposed in the communication apparatus.

In another possible implementation, the communication apparatus further includes an interface circuit, where the interface circuit is a code/data read/write interface circuit, and the interface circuit is configured to receive computer-executable instructions (the computer-executable instructions are stored in the memory, and may be directly read from the memory, or may be read through another device) and transmit the computer-executable instructions to the processor.

In still another possible implementation, the communication apparatus further includes a communication interface, where the communication interface is configured to communicate with a module outside the communication apparatus.

It may be understood that the communication apparatus may be a chip or a chip system. When the communication apparatus is a chip system, the chip system may include a chip, or may include a chip and another discrete component. This is not specifically limited in embodiments of this application.

This application further provides a computer-readable storage medium, where a computer program or instructions are stored thereon, and when the computer program or the instructions are executed by a computer, the functions of any one of the foregoing method embodiments are implemented.

This application further provides a computer program product, where when the computer program product is executed by a computer, the functions of any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and methods described in this application may also be implemented in other manners. For example, the described apparatus embodiments are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, that is, may be located in one place, or may be distributed on a plurality of network units. The parts displayed as units may or may not be physical units. Some or all of the units may be selected according to an actual need to achieve the objectives of the solutions in this embodiment.

In addition, functional units in embodiments of this application may be integrated into one processing unit, or each of the units may exist alone physically, or two or more units may be integrated into one unit.

The foregoing embodiments may be implemented entirely or partially by software, hardware, firmware, or any combination thereof. When the embodiments are implemented using a software program, they may be implemented entirely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like. The computer in the embodiments of this application may include the apparatuses described above.

Although embodiments of this application are described with reference to the present disclosure, during the implementation of this application as claimed, a person skilled in the art may understand and implement other variations of the disclosed embodiments by viewing the accompanying drawings, the disclosed content, and the appended claims. In the claims, the term "comprising" (comprising) does not exclude other components or steps, and the use of the term "a" or "one" does not preclude the presence of more than one such component or step. Several functions listed in the claims may be implemented by a single processor or other unit. Some measures are set forth in dependent claims that are different from each other, but this does not mean that these measures cannot be combined to achieve good effects.

Although this application is described with reference to specific features and embodiments thereof, it is apparent that various modifications and combinations can be made without departing from the scope of this application. Accordingly, this specification and the accompanying drawings are merely example illustrations of this application as defined by the appended claims, and are considered as encompassing any and all modifications, variations, combinations, or equivalents that fall within the scope of this application. It is clear that a person skilled in the art can make various changes and modifications to this application without departing from the scope of this application. Therefore, this application is intended to cover any modifications and variations of this application provided that these modifications and variations fall within the scope of the claims of this application and their equivalent technologies.

## Claims

1. A data processing method, comprising:
determining a plurality of data units at a first protocol layer, wherein the first protocol layer is a lower layer protocol layer of a packet data convergence protocol PDCP layer;
determining a first verification code, wherein the first verification code is used to verify integrity of the plurality of data units;
outputting a first protocol data unit PDU, wherein the first PDU comprises the plurality of data units and the first verification code.

2. The method according to claim 1, wherein the determining a first verification code comprises:
determining verification codes respectively corresponding to the plurality of data units;
determining the first verification code based on the verification codes respectively corresponding to the plurality of data units.

3. The method according to claim 2, wherein the first verification code is an exclusive OR of verification codes respectively corresponding to the plurality of data units; or
the first verification code is a verification code obtained after integrity protection is performed on the verification codes respectively corresponding to the plurality of data units.

4. The method according to claim 2 or 3, wherein the plurality of data units comprise a first data unit, a verification code corresponding to the first data unit is obtained based on the first data unit and at least one of the following: a key, a value corresponding to the first PDU, a transmission direction of the first PDU, a hybrid automatic repeat request HARQ identifier corresponding to the first PDU, a logical channel identifier LCID corresponding to the first data unit, a radio bearer identifier corresponding to the first data unit, or a type parameter of the first data unit, wherein the value corresponding to the first PDU is used to identify the first PDU, or is used to indicate a time domain and/or a frequency domain location at which the first PDU is located.

5. The method according to any one of claims 2 to 4, wherein the plurality of data units comprise a first data unit, the first PDU comprises a first sub-PDU, and the first data unit is located in the first sub-PDU; and a subheader of the first sub-PDU comprises first information, wherein the first information is used to indicate that integrity protection has been performed on the first data unit.

6. The method according to any one of claims 2 to 4, wherein the determining a plurality of data units at a first protocol layer comprises:
determining the plurality of data units at the first protocol layer based on at least one logical channel identifier LCID or at least one logical channel group LCG identifier, wherein a data unit corresponding to the at least one LCID or LCG identifier is a data unit for which integrity protection needs to be performed;
the at least one LCID comprises an LCID of each of the plurality of data units, or the at least one LCG identifier comprises an LCG identifier of each of the plurality of data units.

7. The method according to claim 1, wherein the determining a first verification code comprises:
determining a first input parameter, wherein the first input parameter comprises a first bitstream and at least one of the following: a key, a value corresponding to the first PDU, a transmission direction of the first PDU, or a hybrid automatic repeat request HARQ identifier corresponding to the first PDU; and
determining the first verification code based on the first input parameter;
wherein the first bitstream is a set of the plurality of data units, or the first bitstream is a set of sub PDUs in which the plurality of data units are located; and the value corresponding to the first PDU is used to identify the first PDU, or is used to indicate a time domain and/or a frequency domain location at which the first PDU is located.

8. The method according to claim 7, wherein the plurality of data units are all data units in the first PDU, the header of the first PDU comprises second information, and the second information is used to indicate that integrity protection has been performed on the first PDU or all data units in the first PDU.

9. The method according to claim 7, wherein the first PDU is located in a first transport block TB; the plurality of data units are all data units in the first PDU; and the method further comprises:
determining scheduling information for the first TB, wherein the scheduling information comprises third information, and the third information is used to indicate that integrity protection needs to be performed on a PDU included in the first TB or all data units in the PDU.

10. The method according to claim 7, wherein the plurality of data units are some data units in the first PDU, the header of the first PDU comprises fourth information, and the fourth information is used to indicate that integrity protection has been performed on the plurality of data units or on a sub-PDU in which the plurality of data units are located.

11. The method according to any one of claims 4 or 7 to 10, wherein when the value corresponding to the first PDU is used to identify the first PDU, the value corresponding to the first PDU is a sequence number SN or a count number COUNT;
when the value corresponding to the first PDU is used to indicate a time domain and/or frequency domain location at which the first PDU is located, the value corresponding to the first PDU is any one of the following: a system frame number SFN at which the first PDU is located, a value obtained based on the SFN and a hyper system frame number H-SFN at which the first PDU is located, an index of a time domain resource at which the first PDU is located, or a value of a time-frequency resource indication field; wherein the value of the time-frequency resource indication field indicates a time-frequency resource used to carry the first PDU.

12. The method according to any one of claims 1 to 11, wherein the first protocol layer is a media access control MAC layer, and the data unit comprises a MAC service data unit SDU or a MAC control element CE.

13. A data processing method, wherein the method comprises:
receiving a first protocol data unit PDU, wherein the first PDU comprises a plurality of data units at a first protocol layer and a first verification code, the first protocol layer is a lower layer protocol layer of a packet data convergence protocol PDCP layer, and the first verification code is used to verify integrity of the plurality of data units;
determining a second verification code, wherein the second verification code is used to verify integrity of the plurality of data units;
determining, based on the first verification code and the second verification code, whether the plurality of data units are changed.

14. The method according to claim 13, wherein the determining a second verification code comprises:
determining verification codes respectively corresponding to the plurality of data units; and
determining the second verification code based on the verification codes respectively corresponding to the plurality of data units.

15. The method according to claim 14, wherein the second verification code is an exclusive OR of verification codes respectively corresponding to the plurality of data units; or
the second verification code is a verification code obtained after integrity protection is performed on the verification codes respectively corresponding to the plurality of data units.

16. The method according to claim 14 or 15, wherein the plurality of data units comprise a first data unit, a verification code corresponding to the first data unit is obtained based on the first data unit and at least one of the following: a key, a value corresponding to the first PDU, a transmission direction of the first PDU, a hybrid automatic repeat request HARQ identifier corresponding to the first PDU, a logical channel identifier LCID corresponding to the first data unit, a radio bearer identifier corresponding to the first data unit, or a type parameter of the first data unit, wherein the value corresponding to the first PDU is used to identify the first PDU, or is used to indicate a time domain and/or a frequency domain location at which the first PDU is located.

17. The method according to any one of claims 14 to 16, wherein the plurality of data units comprise a first data unit, the first PDU comprises a first sub-PDU, and the first data unit is located in the first sub-PDU; and a subheader of the first sub-PDU comprises first information, wherein the first information is used to indicate that integrity protection has been performed on the first data unit.

18. The method according to any one of claims 14 to 16, wherein the method further comprises:
determining at least one logical channel identifier LCID or at least one logical channel group LCG identifier, wherein a data unit corresponding to the at least one LCID or LCG identifier is a data unit for which integrity protection needs to be performed;
the at least one LCID comprises an LCID of each data unit in the plurality of data units, or the at least one LCG identifier comprises an LCG identifier of each data unit in the plurality of data units.

19. The method according to claim 13, wherein the determining a second verification code comprises:
determining a first input parameter, wherein the first input parameter comprises a first bitstream and at least one of the following: a key, a value corresponding to the first PDU, a transmission direction of the first PDU, or a hybrid automatic repeat request HARQ identifier corresponding to the first PDU;
determining the second verification code based on the first input parameter;
wherein the first bitstream is a set of the plurality of data units, or the first bitstream is a set of sub PDUs in which the plurality of data units are located; and the value corresponding to the first PDU is used to identify the first PDU, or is used to indicate a time domain and/or a frequency domain location at which the first PDU is located.

20. The method according to claim 19, wherein the plurality of data units are all data units in the first PDU, the header of the first PDU comprises second information, and the second information is used to indicate that integrity protection has been performed on the first PDU or all data units in the first PDU.

21. The method according to claim 19, wherein the first PDU is located in a first transport block TB; the plurality of data units are all data units in the first PDU; and the method further comprises:
determining scheduling information for the first TB, wherein the scheduling information comprises third information, and the third information is used to indicate that integrity protection needs to be performed on a PDU included in the first TB or all data units in the PDU.

22. The method according to claim 19, wherein the plurality of data units are some data units in the first PDU, the header of the first PDU comprises fourth information, and the fourth information is used to indicate that integrity protection has been performed on the plurality of data units or on a sub-PDU in which the plurality of data units are located.

23. The method according to any one of claims 16 or 19 to 22, wherein when the value corresponding to the first PDU is used to identify the first PDU, the value corresponding to the first PDU is a sequence number SN or a count number COUNT;
when the value corresponding to the first PDU is used to indicate a time domain and/or frequency domain location at which the first PDU is located, the value corresponding to the first PDU is any one of the following: a system frame number SFN at which the first PDU is located, a value obtained based on the SFN and a hyper system frame number H-SFN at which the first PDU is located, an index of a time domain resource at which the first PDU is located, or a value of a time-frequency resource indication field; and the value of the time-frequency resource indication field indicates a time-frequency resource used to carry the first PDU.

24. The method according to any one of claims 13 to 23, wherein the first protocol layer is a media access control MAC layer, and the data unit comprises a MAC service data unit SDU or a MAC control element CE.

25. A communication method, wherein the method comprises:
determining, by a first communications apparatus, a plurality of data units at a first protocol layer and a first verification code, wherein the first protocol layer is a lower-layer protocol layer of a packet data convergence protocol PDCP layer, and the first verification code is used to verify integrity of the plurality of data units;
outputting, by the first communications apparatus, a first protocol data unit PDU, wherein a second communications apparatus receives the first PDU, and the first PDU comprises the plurality of data units and the first verification code;
determining, by the second communications apparatus, a second verification code, wherein the second verification code is used to verify integrity of the plurality of data units;
determining, by the second communication apparatus, whether the plurality of data units are changed based on the first verification code and the second verification code.

26. A communication apparatus, wherein the communication apparatus comprises a module configured to perform the method according to any one of claims 1 to 12, or comprises a module configured to perform the method according to any one of claims 13 to 24.

27. A communication apparatus, wherein the communication apparatus comprises a processor; and the processor is configured to run a computer program or an instruction, so that the communication apparatus performs the method according to any one of claims 1 to 12, or so that the communication apparatus performs the method according to any one of claims 13 to 24.

28. A communication system, wherein the communication system comprises a first communication apparatus and a second communication apparatus;
the first communication apparatus is configured to perform the method according to any one of claims 1 to 12, and the second communication apparatus is configured to perform the method according to any one of claims 13 to 24.

29. A chip or chip system, wherein the chip or chip system comprises a processor, the processor is coupled to a memory, the memory is configured to store a program or instructions, and when the program or instructions are executed by the processor, the method according to any one of claims 1 to 12 is performed, or the method according to any one of claims 13 to 24 is performed.

30. A computer-readable storage medium, wherein the computer-readable storage medium stores computer instructions or a program, and when the computer instructions or the program is run on a computer, the method according to any one of claims 1 to 12 is performed, or the method according to any one of claims 13 to 24 is performed.

31. A computer program product, wherein the computer program product comprises computer instructions; and when some or all of the computer instructions are run on a computer, the method according to any one of claims 1 to 12 is performed, or the method according to any one of claims 13 to 24 is performed.
